# EUROPEAN PATENT APPLICATION

(11) **EP 4 572 169 A1**
(43) Date of publication of application: **18.06.2025**
(21) Application number: 23870747.5
(22) Date of filing: 25.09.2023
(51) Int. Cl.: H04B 7/0491

(54) **SECTOR SWEEPING METHOD AND APPARATUS**

(30) Priority: 30.09.2022 CN 202211217584
(71) Applicant: Huawei Technologies Co., Ltd., Shenzhen, Guangdong 518129 (CN)
(72) Inventor: MA, Yunsi, Shenzhen, Guangdong 518129 (CN); RUAN, Wei, Shenzhen, Guangdong 518129 (CN); TANG, Yunshuai, Shenzhen, Guangdong 518129 (CN)
(74) Representative: Thun, Clemens
(86) International application number: PCT/CN2023/121216
(87) International publication number: WO 2024/067518

(57) **Abstract**

This application relates to the field of communication technologies, and discloses a sector sweep method and an apparatus. The method includes: A first communication apparatus transmits a first frame on a first frequency domain resource or a second frequency domain resource, where the first frame includes information about M training sequences, and the M training sequences are used for a sector sweep on the second frequency domain resource, and the first communication apparatus performs the sector sweep with the second communication apparatus on the second frequency domain resource based on the information about the M training sequences, where a frequency corresponding to the first frequency domain resource is less than a frequency corresponding to the second frequency domain resource. In this way, in embodiments of this application, the first communication apparatus performs the sector sweep with the second communication apparatus by using a new SSW frame (namely, a training sequence). Compared with a manner of performing the sector sweep by using an SSW frame, because the new SSW frame does not include redundant information such as a preamble and a physical frame header, this manner can effectively improve a throughput, and further improve sector sweep efficiency.

## Description

### CROSS-REFERENCE TO RELATED APPLICATIONS

This application claims priority to Chinese Patent Application No. 202211217584.9, filed with the China National Intellectual Property Administration on September 30, 2022 and entitled " SECTOR SWEEP METHOD AND APPARATUS", which is incorporated herein by reference in its entirety.

### TECHNICAL FIELD

This application relates to the field of communication technologies, and in particular, to a sector sweep method and an apparatus.

### BACKGROUND

Currently, most devices in a wireless local area network (wireless local area network, WLAN) operate in low frequency bands. As more devices use the low frequency bands, spectrum resources in the low frequency bands become very crowded. Therefore, a current focus is on using high frequency bands (for example, a millimeter-wave band) to obtain more abundant available spectrum resources.

Because a path loss of the millimeter-wave band is large, a beamforming technology is introduced in the millimeter-wave band to offset the path loss. To be specific, a signal is enhanced in a target direction, and a signal is weakened in a non-target direction or a direction of an obstacle, to improve a transmission distance and system performance. Specifically, in the beamforming technology, a transmit end in millimeter-wave communication may transmit a communication signal in a form of a beam in a transmit direction, to concentrate transmit power in the transmit direction, and a receive end in millimeter-wave communication may also receive a communication signal in a receive direction. Directional communication may be implemented by using the beamforming technology, so that a path loss can be well offset.

Beam training in the beamforming technology may include a sector level sweep (sector level sweep, SLS) process. In the SLS process, an initiator and a responder perform a sector sweep by using a sector sweep (sector sweep, SSW) frame. However, because a frame length of a current SSW frame is long, sector sweep efficiency is low.

### SUMMARY

This application provides a sector sweep method and an apparatus, so that a first communication apparatus and a second communication apparatus perform a sector sweep by using a training sequence, to effectively improve sector sweep efficiency.

According to a first aspect, an embodiment of this application provides a sector sweep method, and the method may be applied to a first communication apparatus. The method includes: The first communication apparatus transmits a first frame on a first frequency domain resource, where the first frame includes information about M training sequences, the M training sequences are used for a sector sweep on a second frequency domain resource, and M is an integer greater than 1; and the first communication apparatus performs the sector sweep with the second communication apparatus on the second frequency domain resource based on the information about the M training sequences, where a frequency corresponding to the first frequency domain resource is less than a frequency corresponding to the second frequency domain resource.

According to the method, the first communication apparatus performs the sector sweep with the second communication apparatus by using a new SSW frame (namely, a training sequence). Compared with a manner of performing the sector sweep by using an SSW frame, because the new SSW frame does not include redundant information such as a preamble and a physical frame header, the method can effectively improve a throughput, and further improve sector sweep efficiency.

In a possible design, the first frame further includes first indication information, and the first indication information indicates start time of the sector sweep.

In this way, the second communication apparatus may determine the start time of the sector sweep based on the first indication information. In other words, the first communication apparatus and the second communication apparatus may align the start time of the sector sweep, to avoid high power consumption caused by long-time sector sweep searching because the first communication apparatus or the second communication apparatus does not know when to start the sector sweep.

In a possible design, the first indication information includes an offset, and a time interval between the start time and receiving time of the first frame is equal to the offset.

In a possible design, the information about the M training sequences includes second indication information and/or third indication information, where the second indication information indicates a type of the M training sequences, and the third indication information indicates a value of M.

In this way, the first communication apparatus and the second communication apparatus may align understanding of the M training sequences, and the first communication apparatus transmits the information about the M training sequences to the second communication apparatus, so that the first communication apparatus flexibly controls the second communication apparatus.

In a possible design, the training sequence includes a cyclic prefix, a length of the cyclic prefix is greater than a memory length of a channel, and the channel is used to transmit the training sequence.

In this way, when the length of the cyclic prefix is greater than the memory length of the channel, intersymbol interference introduced by a multipath channel can be effectively avoided. In addition, a low-complexity frequency domain correlation method may be used at a receive end to detect the training sequence.

In a possible design, when the training sequence includes a cyclic prefix, a receive end of the training sequence determines receiving quality of the training sequence (for example, a correlation peak value of the training sequence) according to a frequency domain method, or when the training sequence does not include a cyclic prefix, a receive end of the training sequence determines receiving quality of the training sequence according to a time domain method.

In a possible design, the first frame further includes fourth indication information, and the fourth indication information indicates that the sector sweep is an initiator transmit sector sweep; and that the first communication apparatus performs the sector sweep with the second communication apparatus on the second frequency domain resource based on the information about the M training sequences includes: The first communication apparatus transmits the M training sequences on the second frequency domain resource; and the first communication apparatus receives a second frame from the second communication apparatus on the first frequency domain resource or the second frequency domain resource, where the second frame includes identification information of a first training sequence in the M training sequences, and the identification information of the first training sequence is used to determine an optimal transmit antenna and/or an optimal transmit sector that are/is of the first communication apparatus on the second frequency domain resource and that correspond/corresponds to the second communication apparatus.

In this way, in an existing initiator transmit sector sweep (I-TXSS), after an AP directionally transmits a plurality of SSW frames, a STA quasi-omnidirectionally receives at least one SSW frame, measures receiving quality of the at least one SSW frame, demodulates the at least one SSW frame to obtain an identifier of a transmit antenna used to transmit the at least one SSW frame and an identifier of a transmit sector used to transmit the at least one SSW frame, further determines an optimal transmit antenna and an optimal transmit sector that are of the AP and that correspond to the STA, and transmits, to the AP, an identifier of the optimal transmit antenna and an identifier of the optimal transmit sector. However, because a path loss of a high frequency band is large, reliability of demodulating, by the STA, a quasi-omnidirectionally received SSW frame is low; and if an SSW frame fails to be demodulated, a beam training result may be inaccurate. However, in this embodiment of the present invention, after receiving a training sequence, a STA may select, based on receiving quality of the training sequence, a training sequence with better receiving quality, and further transmit identification information of the training sequence to an AP, and the AP may determine, based on the identification information of the training sequence, an optimal transmit antenna and an optimal transmit sector that are of the AP and that correspond to the STA. This can avoid demodulation of a quasi-omnidirectionally received SSW frame, and improve accuracy of a beam training result.

In a possible design, that the first communication apparatus transmits the M training sequences on the second frequency domain resource includes: The first communication apparatus separately transmits the M training sequences in M transmit sectors of the first communication apparatus on the second frequency domain resource.

In this way, the first communication apparatus may transmit one training sequence in each transmit sector. This helps reduce sector sweep overheads.

In a possible design, the identification information of the first training sequence is a transmitting sequence number of the first training sequence in the M training sequences.

In a possible design, the first frame further includes fourth indication information, and the fourth indication information indicates that the sector sweep is an initiator receive sector sweep; and that the first communication apparatus performs the sector sweep with the second communication apparatus on the second frequency domain resource based on the information about the M training sequences includes: The first communication apparatus transmits the M training sequences on the second frequency domain resource, where the M training sequences are used to determine an optimal receive antenna and/or an optimal receive sector that are/is of the second communication apparatus on the second frequency domain resource and that correspond/corresponds to the first communication apparatus.

In a possible design, the first frame further includes fourth indication information, and the fourth indication information indicates that the sector sweep is a responder transmit sector sweep; and that the first communication apparatus performs the sector sweep with the second communication apparatus on the second frequency domain resource based on the information about the M training sequences includes: The first communication apparatus receives N3 training sequences from the second communication apparatus on the second frequency domain resource, where the N3 training sequences belong to the M training sequences, N3 is an integer greater than 0, and N3 is less than or equal to M; and the first communication apparatus transmits a second frame to the second communication apparatus on the first frequency domain resource or the second frequency domain resource, where the second frame includes identification information of a second training sequence in the N3 training sequences, and the identification information of the second training sequence is used to determine an optimal transmit antenna and/or an optimal transmit sector that are/is of the second communication apparatus on the second frequency domain resource and that correspond/corresponds to the first communication apparatus.

In a possible design, the identification information of the second training sequence is a transmitting sequence number of the second training sequence in the M training sequences.

In a possible design, the first frame further includes fourth indication information, and the fourth indication information indicates that the sector sweep is a responder receive sector sweep; and that the first communication apparatus performs the sector sweep with the second communication apparatus on the second frequency domain resource based on the information about the M training sequences includes: The first communication apparatus receives N4 training sequences from the second communication apparatus on the second frequency domain resource, where the N4 training sequences belong to the M training sequences, N4 is an integer greater than 0, and N4 is less than or equal to M; and the first communication apparatus determines, based on receiving quality of the N4 training sequences, an optimal receive antenna and/or an optimal receive sector that are/is of the first communication apparatus on the second frequency domain resource and that correspond/corresponds to the second communication apparatus.

In a possible design, that the first communication apparatus receives the N4 training sequences from the second communication apparatus on the second frequency domain resource includes: The first communication apparatus separately receives the N4 training sequences from the second communication apparatus in N4 receive sectors of the first communication apparatus on the second frequency domain resource.

According to a second aspect, an embodiment of this application provides a sector sweep method, and the method may be applied to a second communication apparatus. The method includes: The second communication apparatus receives a first frame from a first communication apparatus on a first frequency domain resource or a second frequency domain resource, where the first frame includes information about M training sequences, the M training sequences are used for a sector sweep on the second frequency domain resource, and M is an integer greater than 1; and the second communication apparatus performs the sector sweep with the first communication apparatus on the second frequency domain resource based on the information about the M training sequences, where a frequency corresponding to the first frequency domain resource is less than a frequency corresponding to the second frequency domain resource.

In a possible design, the first frame further includes first indication information, and the first indication information indicates start time of the sector sweep.

In a possible design, the first indication information includes an offset, and a time interval between the start time and receiving time of the first frame is equal to the offset.

In a possible design, the information about the M training sequences includes second indication information and/or third indication information, where the second indication information indicates a type of the M training sequences, and the third indication information indicates a value of M.

In a possible design, the training sequence includes a cyclic prefix, a length of the cyclic prefix is greater than a memory length of a channel, and the channel is used to transmit the training sequence.

In a possible design, the first frame further includes fourth indication information, and the fourth indication information indicates that the sector sweep is an initiator transmit sector sweep; and that the second communication apparatus performs the sector sweep with the first communication apparatus on the second frequency domain resource based on the information about the M training sequences includes: The second communication apparatus receives N1 training sequences from the first communication apparatus on the second frequency domain resource, where the N1 training sequences belong to the M training sequences, N1 is an integer greater than 0, and N1 is less than or equal to M; and the second communication apparatus transmits a second frame to the first communication apparatus on the first frequency domain resource or the second frequency domain resource, where the second frame includes identification information of a first training sequence in the N1 training sequences, and the identification information of the first training sequence is used to determine an optimal transmit antenna and/or an optimal transmit sector that are/is of the first communication apparatus on the second frequency domain resource and that correspond/corresponds to the second communication apparatus.

In a possible design, the identification information of the first training sequence is a transmitting sequence number of the first training sequence in the M training sequences.

In a possible design, the first frame further includes fourth indication information, and the fourth indication information indicates that the sector sweep is an initiator receive sector sweep; and that the second communication apparatus performs the sector sweep with the first communication apparatus on the second frequency domain resource based on the information about the M training sequences includes: The second communication apparatus receives N2 training sequences from the first communication apparatus on the second frequency domain resource, where the N2 training sequences belong to the M training sequences, N2 is an integer greater than 0, and N2 is less than or equal to M; and the second communication apparatus determines, based on receiving quality of the N2 training sequences, an optimal receive antenna and/or an optimal receive sector that are/is of the second communication apparatus on the second frequency domain resource and that correspond/corresponds to the first communication apparatus.

In a possible design, that the second communication apparatus receives the N2 training sequences from the first communication apparatus on the second frequency domain resource includes: The second communication apparatus separately receives the N2 training sequences from the first communication apparatus in N2 receive sectors of the second communication apparatus on the second frequency domain resource.

In a possible design, the first frame further includes fourth indication information, and the fourth indication information indicates that the sector sweep is a responder transmit sector sweep; and that the second communication apparatus performs the sector sweep with the first communication apparatus on the second frequency domain resource based on the information about the M training sequences includes: The second communication apparatus transmits the M training sequences on the second frequency domain resource; and the second communication apparatus receives a second frame from the first communication apparatus on the first frequency domain resource or the second frequency domain resource, where the second frame includes identification information of a second training sequence in the M training sequences, and the identification information of the second training sequence is used to determine an optimal transmit antenna and/or an optimal transmit sector that are/is of the second communication apparatus on the second frequency domain resource and that correspond/corresponds to the first communication apparatus.

In a possible design, that the second communication apparatus transmits the M training sequences on the second frequency domain resource includes: The second communication apparatus separately transmits the M training sequences in M transmit sectors of the second communication apparatus on the second frequency domain resource.

In a possible design, the identification information of the second training sequence is a transmitting sequence number of the second training sequence in the M training sequences.

In a possible design, the first frame further includes fourth indication information, and the fourth indication information indicates that the sector sweep is a responder receive sector sweep; and that the second communication apparatus performs the sector sweep with the first communication apparatus on the second frequency domain resource based on the information about the M training sequences includes: The second communication apparatus transmits the M training sequences on the second frequency domain resource, where the M training sequences are used to determine an optimal receive antenna and/or an optimal receive sector that are/is of the first communication apparatus on the second frequency domain resource and that correspond/corresponds to the second communication apparatus.

It may be understood that the method described in the second aspect corresponds to the method described in the first aspect. For beneficial effects of related technical features in the second aspect, refer to descriptions in the first aspect. Details are not described again.

According to a third aspect, this application provides a communication apparatus. The communication apparatus has a function of implementing the first aspect or the second aspect. For example, the communication apparatus includes a corresponding module, unit, or means (means) for performing an operation in the first aspect or the second aspect. The module, unit, or means may be implemented by using software, may be implemented by using hardware, or may be implemented by hardware by executing corresponding software.

In a possible design, the communication apparatus includes a processing unit and a communication unit. The communication unit may be configured to receive/transmit a signal, to implement communication between the communication apparatus and another apparatus. The processing unit may be configured to perform some internal operations of the communication apparatus. Functions performed by the processing unit and the communication unit may correspond to operations in the first aspect or the second aspect.

In a possible design, the communication apparatus includes a processor, and the processor may be coupled to a memory. The memory may store a necessary computer program or instructions for implementing functions in the first aspect or the second aspect. The processor may execute the computer program or the instructions stored in the memory. When the computer program is executed or the instructions are executed, the communication apparatus is enabled to implement the method in any possible design or implementation of the first aspect or the second aspect.

In a possible design, the communication apparatus includes a processor and a memory. The memory may store a necessary computer program or instructions for implementing functions in the first aspect or the second aspect. The processor may execute the computer program or the instructions stored in the memory. When the computer program is executed or the instructions are executed, the communication apparatus is enabled to implement the method in any possible design or implementation of the first aspect or the second aspect.

In a possible design, the communication apparatus includes a processor and an interface circuit, and the processor is configured to: communicate with another apparatus via the interface circuit, and perform the method in any possible design or implementation of the first aspect or the second aspect.

It may be understood that in the third aspect, the processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into a same chip, or may be disposed on different chips. A type of the memory and a manner of disposing the memory and the processor are not limited in this embodiment of this application.

According to a fourth aspect, this application provides a communication system. The communication system may include a first communication apparatus and a second communication apparatus, the first communication apparatus is configured to perform the sector sweep method provided in the first aspect, and the second communication apparatus is configured to perform the sector sweep method provided in the second aspect.

According to a fifth aspect, this application provides a computer-readable storage medium. The computer-readable storage medium stores computer-readable instructions, and when a computer reads and executes the computer-readable instructions, the computer is enabled to perform the method in any one of the possible designs of the first aspect or the second aspect.

According to a sixth aspect, this application provides a computer program product. When a computer reads and executes the computer program product, the computer is enabled to perform the method in any one of the possible designs of the first aspect or the second aspect.

According to a seventh aspect, this application provides a chip. The chip includes a processor, and the processor is coupled to a memory, and is configured to read and execute a software program stored in the memory, to implement the method in any one of the possible designs of the first aspect or the second aspect.

### BRIEF DESCRIPTION OF DRAWINGS

FIG. 1 is a diagram of a network architecture to which an embodiment of this application is applicable;
FIG. 2 is a diagram of an AP MLD according to an embodiment of this application;
FIG. 3 is a diagram of links between an AP MLD and a non-AP MLD according to an embodiment of this application;
FIG. 4 is a diagram of a possible SLS process according to an embodiment of this application;
FIG. 5 shows examples of structures of an SSW frame, an SSW field, and an SSW feedback field according to an embodiment of this application;
FIG. 6 is a schematic flowchart corresponding to a sector sweep method according to an embodiment of this application;
FIG. 7 shows examples of three types of training sequences according to an embodiment of this application;
FIG. 8 shows examples of structures of an improved SSW field and an improved SSW feedback field according to an embodiment of this application;
FIG. 9A and FIG. 9B each are a schematic flowchart of an I-TXSS procedure according to an embodiment of this application;
FIG. 10A and FIG. 10B each are a schematic flowchart of an I-RXSS procedure according to an embodiment of this application;
FIG. 11A and FIG. 11B each are a schematic flowchart of an R-TXSS procedure according to an embodiment of this application;
FIG. 12A and FIG. 12B each are a schematic flowchart of an R-RXSS procedure according to an embodiment of this application;
FIG. 13 is a possible example block diagram of an apparatus according to an embodiment of this application;
FIG. 14 is a diagram of a structure of an AP according to an embodiment of this application; and
FIG. 15 is a diagram of a structure of a STA according to an embodiment of this application.

### DESCRIPTION OF EMBODIMENTS

The following describes technical solutions in embodiments of this application with reference to accompanying drawings in embodiments of this application.

Embodiments of this application may be applied to a WLAN, for example, may be applied to any protocol in the Institute of Electrical and Electronics Engineers (institute of electrical and electronics engineers, IEEE) 802.11 series protocols currently used in the WLAN. The WLAN may include one or more basic service sets (basic service set, BSS), and network nodes in the basic service set include an access point (access point, AP) and a station (station, STA). In addition, IEEE 802.11ad introduces a personal basic service set (personal basic service set, PBSS) and a personal basic service set control point (PBSS control point, PCP) on a basis of the original BSS. Each personal basic service set may include one AP/PCP and a plurality of non-APs/PCPs associated with the AP/PCP. In embodiments of this application, the non-AP/PCP may be referred to as a STA, and the PCP may be understood as a name of a role of the AP in the PBSS.

Embodiments of this application may be also applicable to a wireless local area network such as an internet of things (internet of things, IoT) network or a vehicle to everything (vehicle to X, V2X) network. Certainly, embodiments of this application may be further applicable to other possible communication systems, for example, a long term evolution (long term evolution, LTE) communication system, an LTE frequency division duplex (frequency division duplex, FDD) communication system, an LTE time division duplex (time division duplex, TDD) communication system, a universal mobile telecommunication system (universal mobile telecommunication system, UMTS), a worldwide interoperability for microwave access (worldwide interoperability for microwave access, WiMAX) communication system, a 5th generation (5th generation, 5G) communication system, a future evolved communication system, and the like.

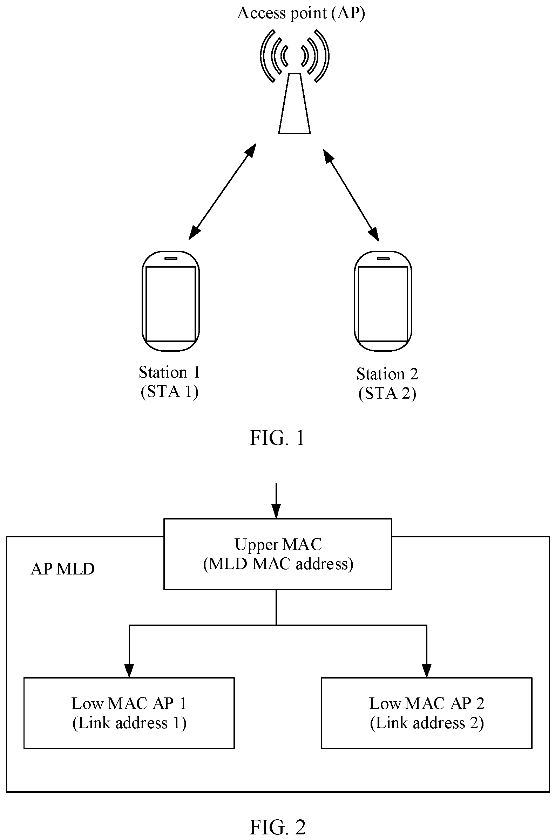

The following uses an example in which embodiments of this application are applicable to a WLAN. FIG. 1 is a diagram of a network architecture of a WLAN to which an embodiment of this application is applicable. In FIG. 1, an example in which the WLAN includes one AP and two STAs is used. A STA associated with the AP can receive a radio frame transmitted by the AP, and can also transmit a radio frame to the AP. Embodiments of this application are described by using communication between the AP and the STA as an example. It may be understood that embodiments of this application may also be applicable to communication between APs, for example, the APs may communicate with each other through a distributed system (distributed system, DS), and may also be applicable to communication between STAs.

The AP may be an access point for a terminal device (such as a mobile phone) to access a wired (or wireless) network, and is mainly deployed at home, in a building, and in a campus. A typical coverage radius of the AP is tens of meters to hundreds of meters. Certainly, the AP may alternatively be deployed outdoors. The AP is equivalent to a bridge that connects a wired network and a wireless network, and a main function of the AP is to connect various wireless network clients together and then connect the wireless network to the Ethernet. For example, the AP may be a terminal device (for example, a mobile phone) or a network device (for example, a router) with a wireless fidelity (wireless fidelity, Wi-Fi) chip. In embodiments of this application, the AP may be a device that supports the 802.11be standard, or may be a device that supports a plurality of WLAN standards of the 802.11 family, such as 802.11ax, 802.11ay, 802.11ac, 802.11n, 802.11g, 802.11b, 802.11a, and a next generation of 802.11be.

The STA may be a wireless communication chip, a wireless sensor, a wireless communication terminal, or the like, and may also be referred to as a user. For example, the STA may be a mobile phone, a tablet computer, a set-top box, a smart television, a smart wearable device, a vehicle-mounted communication device, or a computer that supports a Wi-Fi communication function. Optionally, the STA may support the 802.11be standard, or may support a plurality of WLAN standards of the 802.11 family, such as 802.11 ax, 802.11ay, 802.11ac, 802.11n, 802.11g, 802.11b, 802.11a, and a next generation of 802.11be.

It may be understood that quantities of APs and STAs shown in FIG. 1 are merely examples, and there may be more or fewer APs and STAs.

The AP and the STAs in FIG. 1 may be communication apparatuses having a dual-mode communication function, that is, may be communication apparatuses having a low frequency (low frequency, LF) frequency band (or channel or link) communication mode and a high frequency (high frequency, HF) frequency band communication mode. Low frequency bands include, for example, sub 1 gigahertz (GHz), 2.4 GHz, 5 GHz, and 6 GHz, and high frequency bands include, for example, 45 GHz and 60 GHz.

For example, a communication apparatus having the dual-mode communication function may be a dual-band dual-concurrent (dual-band dual-concurrent, DBDC) device, or may be a multi-link device (multi-link device, MLD), which are described separately in the following.

### (1) DBDC device

The DBDC device integrates two sets of independent and complete links, and includes two sets of baseband processors and radio frequency front ends. Therefore, the DBDC device can operate independently in two frequency bands.

When both an AP and a STA are DBDC devices, for example, the AP is a DBDC device 1, and the STA is a DBDC device 2, the AP and the STA may exchange signaling on a low frequency link, to establish a low frequency link connection, and exchange signaling on a high frequency link, to establish a high frequency link connection.

### (2) MLD

In the IEEE 802.11be protocol, the MLD supports multi-link operation technologies, and the MLD has a plurality of radio frequency modules that separately operate in different frequency bands. For example, frequency bands in which the MLD operates may be all or a part of sub 1 GHz, 2.4 GHz, 5 GHz, 6 GHz, and a high frequency 60 GHz. The MLD may include an AP MLD and/or a non-access point (non-AP) MLD. For example, the non-AP MLD may be a STA MLD.

The AP MLD is used as an example. The AP MLD may include one or more affiliated (affiliated) stations, and each affiliated station has a respective media access control (media access control, MAC) address (address). As shown in FIG. 2, affiliated stations of an AP MLD include an AP 1 and an AP 2, a low (low) MAC address of the AP 1 is a link address 1, and a low MAC address of the AP 2 is a link address 2. In addition, the AP MLD also has an upper (upper) MAC address, which is referred to an MLD MAC address.

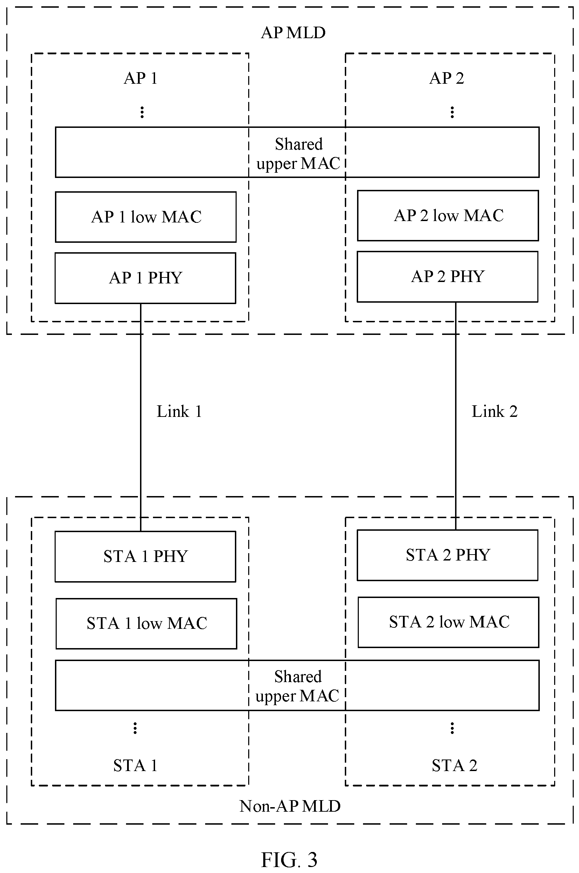

The AP MLD and the non-AP MLD may establish a multi-link connection by exchanging signaling on a low frequency link. As shown in FIG. 3, an AP MLD includes an AP 1 and an AP 2, the AP 1 includes an AP 1 PHY, an AP 1 low MAC, and an upper MAC, the AP 2 includes an AP 2 PHY, an AP 2 low MAC, and the upper MAC, and the AP 1 and the AP 2 share the upper MAC; and a non-AP MLD includes a STA 1 and a STA 2, the STA 1 includes a STA 1 PHY, a STA 1 low MAC, and an upper MAC, the STA 2 includes a STA 2 PHY, a STA 2 low MAC, and the upper MAC, the STA 1 and the STA 2 share the upper MAC, the AP 1 and the STA 1 are connected through a link 1, and the AP 2 and the STA 2 are connected through a link 2.

When a plurality of links are established, the non-AP MLD transmits an association request (association request) frame on the link 1, and the association request frame carries STA-side information of the link 1 and STA-side information of the link 2. For example, the association request frame may carry a multi-link element (multi-link element) field, and the multi-link element field is used to carry information about the non-AP MLD and information about a station in the non-AP MLD. The AP MLD transmits an association response (association response) frame on the link 1, and the association response frame carries AP-side information on a link 1 side and AP-side information on a link 2 side. In this way, the STA 1 and the STA 2 in the non-AP MLD respectively establish an association with the AP 1 and the AP 2 in the AP MLD.

As described in the background, because a path loss of a high frequency band is large, beam training needs to be performed when different devices communicate with each other in the high frequency band. In the network architecture shown in FIG. 1, when the AP initiates beam training, the AP may be referred to as an initiator (initiator), and the STA may be referred to as a responder (responder); or when the STA initiates beam training, the STA may be referred to as an initiator, and the AP may be referred to as a responder. In other words, a party that initiates beam training may be referred to as an initiator, and a party that responds to the beam training may be referred to as a responder. Optionally, in some other possible scenarios, a party that initiates beam training may be referred to as a responder, and a party that responds to the beam training may be referred to as an initiator. Alternatively, a party in beam training is always referred to as an initiator, and the other party in the beam training is always referred to as a responder; the initiator initiates beam training, or may respond to beam training initiated by the responder; and similarly, the responder also initiates beam training, and may also respond to beam training initiated by the initiator.

The following first explains and describes technical features related to beam training in embodiments of this application. These explanations are intended to facilitate understanding of embodiments of this application, and should not be considered as a limitation on the protection scope claimed in this application.

### (1) SLS process

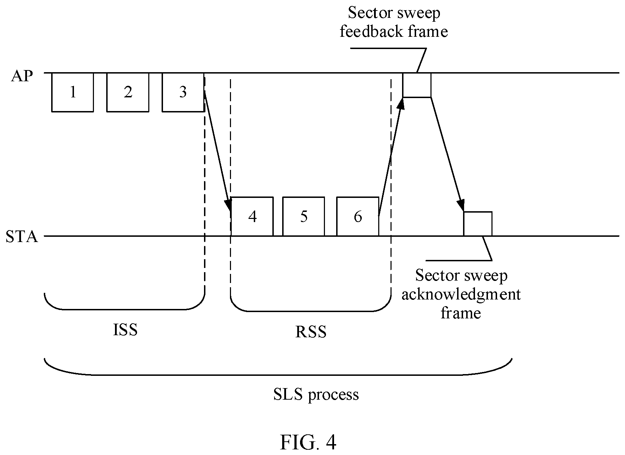

In existing short-range high-frequency communication protocols (for example, the 802.11ad protocol and the 802.11ay protocol), beam training includes an SLS process, and optionally, further includes a beam refinement protocol (beam refinement protocol, BRP) process. FIG. 4 is a diagram of a possible SLS process. As shown in FIG. 4, the SLS process includes four phases: an initiator sector sweep (initiator sector sweep, ISS) phase, a responder sector sweep (responder sector sweep, RSS) phase, a transmission phase of a sector sweep feedback (SSW Feedback) frame, and a transmission phase of a sector sweep acknowledgment (SSW acknowledgment, SSW Ack) frame. A basic link between an initiator and a responder is established through the four phases, the initiator may obtain an optimal transmit sector and an optimal receive sector that are of the initiator and that correspond to the responder, and the responder may also obtain an optimal transmit sector and an optimal receive sector that are of the responder and that correspond to the initiator, that is, a transmit beam and a receive beam may be selected, and gains of the transmit beam and the receive beam may be used. In embodiments of this application, an example in which an AP is an initiator and a STA is a responder is used.

The following separately describes the four phases in detail.

### (1.1) ISS phase

The ISS phase may include an initiator transmit sector sweep (initiator transmission of sector sweep, I-TXSS) subphase and/or an initiator receive sector sweep (initiator reception of sector sweep, I-RXSS) subphase. FIG. 4 is illustrated by using an example in which the ISS phase includes the I-TXSS subphase.

In the I-TXSS subphase, an AP may directionally transmit a plurality of SSW frames in a high frequency band, for example, an SSW frame 1, an SSW frame 2, and an SSW frame 3, to perform transmit sector training of the AP. For example, the AP may transmit one or more SSW frames in each of a plurality of transmit directions of the AP, and each transmit direction may correspond to one transmit antenna and one transmit sector of the transmit antenna. Correspondingly, a STA may quasi-omnidirectionally receive at least one SSW frame from the AP in the high frequency band, and then the STA may determine an optimal transmit antenna and an optimal transmit sector that are of the AP and that correspond to the STA, and feed back, to the AP, an identifier of the optimal transmit antenna and an identifier of the optimal transmit sector (for example, the identifiers may be fed back to the AP through an SSW frame in the R-TXSS subphase).

In the I-RXSS subphase, the AP may quasi-omnidirectionally transmit a plurality of SSW frames in a high frequency band, to perform receive sector training of the AP; and correspondingly, the STA may directionally receive at least one SSW frame in the high frequency band, and then the STA may determine, based on receiving quality of the at least one SSW frame, an optimal receive antenna and an optimal receive sector that are of the STA and that correspond to the AP.

For example, the receiving quality of the SSW frame may include at least one of the following: received signal power or strength, a signal to interference plus noise ratio (signal to interference plus noise ratio, SINR), a bit error rate, and the like.

It may be understood that the ISS (that is, the I-TXSS and/or the I-RXSS) may also be referred to as downlink beamforming training (downlink beamforming training, DL BFT). The optimal transmit antenna and the optimal transmit sector that are of the AP and that correspond to the STA are an optimal downlink transmit antenna and an optimal downlink transmit sector. The optimal receive antenna and the optimal receive sector that are of the STA and that correspond to the AP are an optimal downlink receive antenna and an optimal downlink receive sector.

### (1.2) RSS phase

The RSS phase may include a responder transmit sector sweep (responder transmission of sector sweep, R-TXSS) subphase and/or a responder receive sector sweep (responder reception of sector sweep, R-RXSS) subphase. FIG. 4 is illustrated by using an example in which the RSS phase includes the R-TXSS subphase.

In the R-TXSS subphase, the STA may directionally transmit a plurality of SSW frames in a high frequency band, for example, an SSW frame 4, an SSW frame 5, and an SSW frame 6, to perform transmit sector training of the STA; and correspondingly, the AP may quasi-omnidirectionally receive at least one SSW frame from the STA in the high frequency band, and then the AP may determine an optimal transmit antenna and an optimal transmit sector that are of the STA and that correspond to the AP, and feed back, to the STA, an identifier of the optimal transmit antenna and an identifier of the optimal transmit sector (for example, the identifiers may be fed back to the STA through a sector sweep feedback frame).

In the R-RXSS subphase, the STA may quasi-omnidirectionally transmit a plurality of SSW frames in a high frequency band, to perform receive sector training of the STA; and correspondingly, the AP may directionally receive at least one SSW frame in the high frequency band, and then the AP may determine an optimal receive antenna and an optimal receive sector that are of the AP and that correspond to the STA.

It may be understood that the RSS (that is, the R-TXSS and/or the R-RXSS) may also be referred to as uplink beamforming training (uplink beamforming training, UL BFT). The optimal transmit antenna and the optimal transmit sector that are of the STA and that correspond to the AP are an optimal uplink transmit antenna and an optimal uplink transmit sector. The optimal receive antenna and the optimal receive sector that are of the AP and that correspond to the STA are an optimal uplink receive antenna and an optimal uplink receive sector.

In embodiments of this application, "directionally transmitting" may mean alternately transmitting in different transmit sectors through different transmit antennas, and "directionally receiving" may mean alternately receiving in different receive sectors through different receive antennas.

### (1.3) Transmission phase of the sector sweep feedback frame

In the transmission phase of the sector sweep feedback frame, the AP may transmit the sector sweep feedback frame to the STA in a high frequency band based on an optimal transmit antenna and an optimal transmit sector that are of the AP and that correspond to the STA. The sector sweep feedback frame includes an identifier of the optimal transmit antenna that is of the STA and that corresponds to the AP and an identifier of the optimal transmit sector that is of the STA and that corresponds to the AP.

### (1.4) Transmission phase of the sector sweep acknowledgment frame

In the transmission phase of the sector sweep acknowledgment frame, the STA may transmit the sector sweep acknowledgment frame to the AP in a high frequency band based on an optimal transmit antenna and an optimal transmit sector that are of the STA and that correspond to the AP.

In this way, a result of the SLS phase may be acknowledged through the sector sweep feedback frame and the sector sweep acknowledgment frame. In addition, whether a BRP process needs to be performed may be further determined through the sector sweep feedback frame and the sector sweep acknowledgment frame.

It may be understood that the SLS process may include a plurality of the foregoing four phases, or the BRP process may be performed after a round of the foregoing four phases. Beam training in the BRP process is different from beam training in the SLS process. For the beam training in the BRP process, refer to the conventional technology. This is not limited in embodiments of this application.

### (2) SSW frame

The SSW frame transmitted in the SLS phase is used to perform a sector sweep function. In embodiments of this application, that the SSW frame performs the sector sweep function is used as an example. In another possible example, another possible frame defined in a current protocol, for example, a directional multi-gigabit (directional multi-gigabit, DMG) signal frame or a short SSW frame, may be used to perform the sector sweep function.

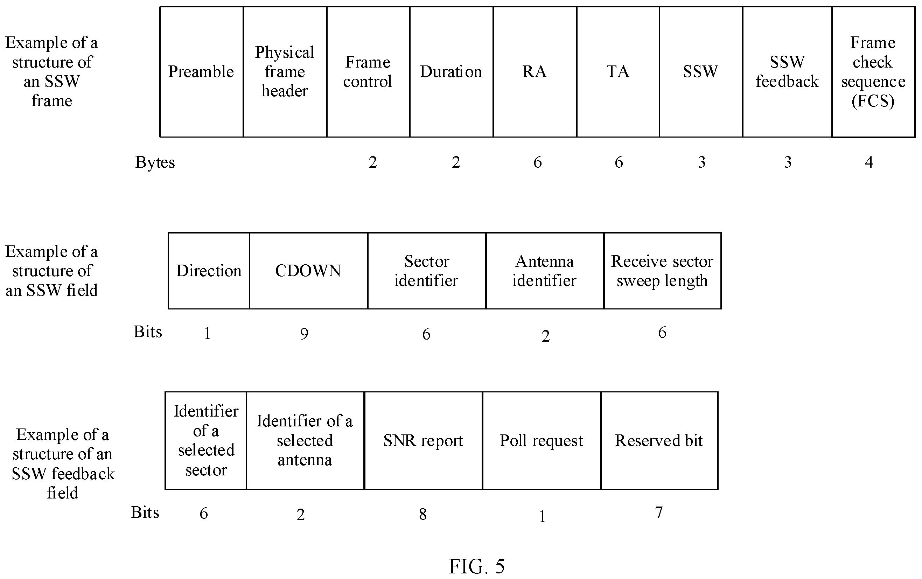

As shown in FIG. 5, the SSW frame may include a frame control (frame control) field, a duration (duration) field, a receiver address (receiver address, RA) field, a transmitter address (transmitter address, TA) field, a sector sweep field (SSW field), a sector sweep feedback field (SSW feedback field), and a frame check sequence (frame check sequence, FCS) field. The frame control field, the duration field, the receiver address field, and the transmitter address field may be understood as MAC frame headers, and the rest may be understood as payloads.

In addition, when an AP or a STA transmits the SSW frame, encapsulation at a physical layer further needs to be performed. Therefore, the SSW frame may further include a preamble and a physical frame header. Information such as the preamble and the physical frame header in the SSW frame may be understood as information used to demodulate the SSW frame.

For ease of describing the solutions in embodiments of this application, the SSW field and the SSW field are separately briefly described herein. It may be understood that for meanings of fields included in the SSW frame, refer to an existing protocol.

### (2.1) SSW field

As shown in FIG. 5, in the I-TXSS subphase, an SSW field in an SSW frame directionally transmitted by an AP may include a direction (direction) field, a count down (count down, CDOWN) field, a sector identifier (sector ID) field, an antenna identifier (antenna ID) field, and a receive sector sweep length (RXSS length) field. The sector identifier field includes an identifier of a sector used to transmit the SSW frame, and the antenna identifier field includes an identifier of an antenna used to transmit the SSW frame. In this way, after receiving the SSW frame, a STA may obtain, by demodulating the SSW frame, the identifier of the sector used to transmit the SSW frame and the identifier of the antenna used to transmit the SSW frame.

It may be understood that, in the R-TXSS subphase, an SSW field in an SSW frame directionally transmitted by the STA may also include the foregoing plurality of fields.

### (2.2) SSW feedback field

As shown in FIG. 5, in the R-TXSS subphase, an SSW feedback field in an SSW frame directionally transmitted by a STA may include a sector select (sector select) field, an antenna select (antenna select) field, a reserved (reserved) bit, a poll request field, and a reserved bit. The sector select field includes an identifier of an optimal transmit sector that is of an AP and that corresponds to the STA, and the antenna select field includes an identifier of an optimal transmit antenna that is of the AP and that corresponds to the STA. That is, the STA feeds back, to the AP through the SSW feedback field in the SSW frame, the identifier of the optimal transmit antenna that is of the AP and that corresponds to the STA and the identifier of the optimal transmit sector that is of the AP and that corresponds to the STA.

It may be understood that a sector sweep feedback frame may also include the SSW feedback field shown in FIG. 5. That is, the AP feeds back, to the STA through the SSW feedback field in the sector sweep feedback frame, the identifier of the optimal transmit antenna that is of the STA and that corresponds to the AP and the identifier of the optimal transmit sector that is of the STA and that corresponds to the AP.

It can be learned from the foregoing description that, in the SLS process, the AP and the STA may perform a sector sweep by using the SSW frame. However, because each frame (for example, the SSW frame) used for the sector sweep includes redundant information such as a preamble and a physical frame header, a frame length of the SSW frame is long, affecting sector sweep efficiency.

Based on this, embodiments of this application provide a sector sweep method in which a sector sweep is performed through a new SSW frame (including only a training sequence) to effectively improve sector sweep efficiency.

The following describes in detail the sector sweep method provided in embodiments of this application with reference to specific embodiments. In the specific embodiments, an example in which the method provided in embodiments of this application is applied to the network architecture shown in FIG. 1 is used. In addition, the method may be performed by two communication apparatuses. The two communication apparatuses are, for example, a first communication apparatus and a second communication apparatus. The first communication apparatus may be an AP or a communication apparatus that can support an AP in implementing functions required by the method, or certainly may be another communication apparatus, for example, a chip or a chip system. The second communication apparatus may be a STA or a communication apparatus that can support a STA in implementing functions required by the method, or certainly may be another communication apparatus, for example, a chip or a chip system. For ease of description, the following uses an example in which the method is performed by an AP and a STA. In other words, an example in which the first communication apparatus is an AP and the second communication apparatus is a STA is used.

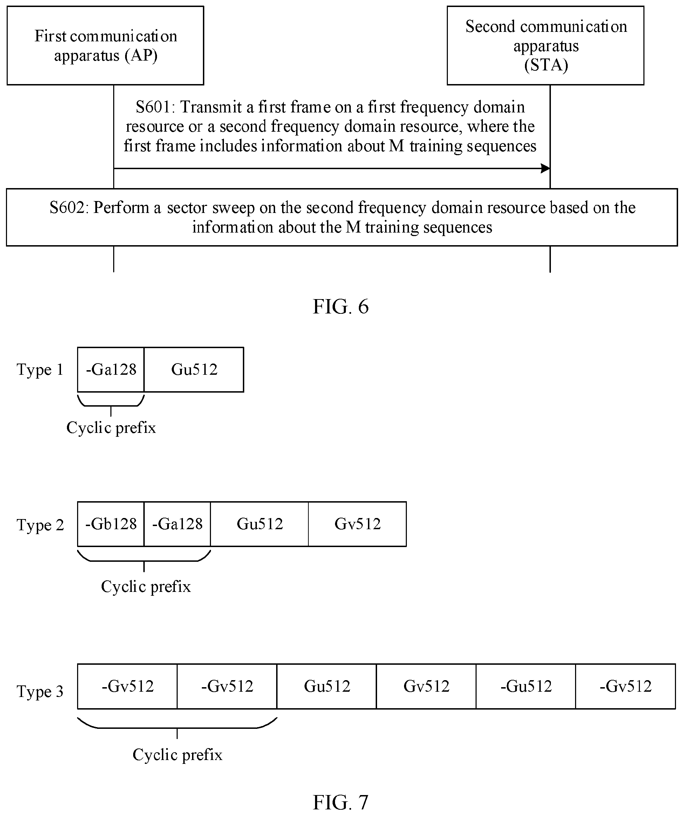

FIG. 6 is a schematic flowchart corresponding to a sector sweep method according to an embodiment of this application. As shown in FIG. 6, the procedure may include the following steps.

S601: An AP transmits a first frame on a first frequency domain resource or a second frequency domain resource, where the first frame includes information about M training sequences, the M training sequences are used for a sector sweep on the second frequency domain resource, and M is an integer greater than 1; and correspondingly, a STA receives the first frame from the AP on the first frequency domain resource.

For example, that the AP transmits the first frame on the first frequency domain resource or the second frequency domain resource may mean that the AP omnidirectionally or quasi-omnidirectionally transmits the first frame on the first frequency domain resource or the second frequency domain resource. That the STA receives the first frame from the AP on the first frequency domain resource or the second frequency domain resource may mean that the STA omnidirectionally or quasi-omnidirectionally receives the first frame from the AP on the first frequency domain resource or the second frequency domain resource.
(1) The first frequency domain resource and the second frequency domain resource are described.

For example, the first frequency domain resource is different from the second frequency domain resource, and a frequency corresponding to the first frequency domain resource is less than a frequency corresponding to the second frequency domain resource. A frequency domain resource may be understood as a frequency range, and that the frequency corresponding to the first frequency domain resource is less than the frequency corresponding to the second frequency domain resource may mean that a highest frequency corresponding to the first frequency domain resource is less than a lowest frequency corresponding to the second frequency domain resource. For example, the first frequency domain resource is a frequency domain resource in a low frequency band, and the second frequency domain resource is a frequency domain resource in a high frequency band.

In other words, the AP may omnidirectionally transmit the first frame in the low frequency band, or the AP may quasi-omnidirectionally transmit the first frame in the high frequency band. In this embodiment of this application, an example in which the AP omnidirectionally transmits the first frame in the low frequency band is used below for description.

(2) The training sequence is described.

In this embodiment of this application, the training sequence may be used to perform a sector sweep function (different from the conventional technology in which a sector sweep function is performed through an SSW frame). In other words, in this embodiment of this application, a new SSW frame is designed, and the new SSW frame may include only the training sequence, and does not include other redundant information such as a preamble and a physical frame header. Therefore, a throughput can be improved, and sector sweep efficiency can be further improved.

For example, the training sequence may be a known bit sequence. For example, the training sequence may be a Gray (golay) sequence, a ZC sequence, or another possible sequence. This is not specifically limited.

For example, the training sequence may not have (or do not include) a cyclic prefix. In this case, a frame length of the new SSW frame is equal to a length of the training sequence. Alternatively, the training sequence may have a cyclic prefix. In this case, a frame length of the new SSW frame is equal to a sum of a length of the training sequence and a length of the cyclic prefix of the training sequence. A length of the cyclic prefix is not limited in this embodiment of this application. In an example, the length of the cyclic prefix may be determined based on a memory length of a channel, and the channel is a channel used to transmit the training sequence. For example, the length of the cyclic prefix is greater than the memory length of the channel. This can avoid intersymbol interference introduced by a multipath channel. In addition, the training sequence may be detected at a receive end by using a low-complexity frequency domain correlation method.

For example, the training sequence is a Gray sequence. FIG. 7 shows examples of three types of training sequences provided in this embodiment of this application. A length of a training sequence corresponding to a type 1 is 512 bits, and a length of a cyclic prefix is 128 bits. When a type of the training sequence included in the new SSW frame is the type 1, a frame length of the new SSW frame is 640 bits. A length of a training sequence corresponding to a type 2 is 1024 bits, and a length of a cyclic prefix is 256 bits. When a type of the training sequence included in the new SSW frame is the type 2, a frame length of the new SSW frame is 1280 bits. A length of a training sequence corresponding to a type 3 is 2048 bits, and a length of a cyclic prefix is 1024 bits. When a type of the training sequence included in the new SSW frame is the type 3, a frame length of the new SSW frame is 3072 bits.

It may be understood that a specific type of the training sequence may be predefined in a protocol, or may be indicated by the AP to the STA through the first frame. For details, refer to descriptions of the first frame.

(3) The first frame is described.

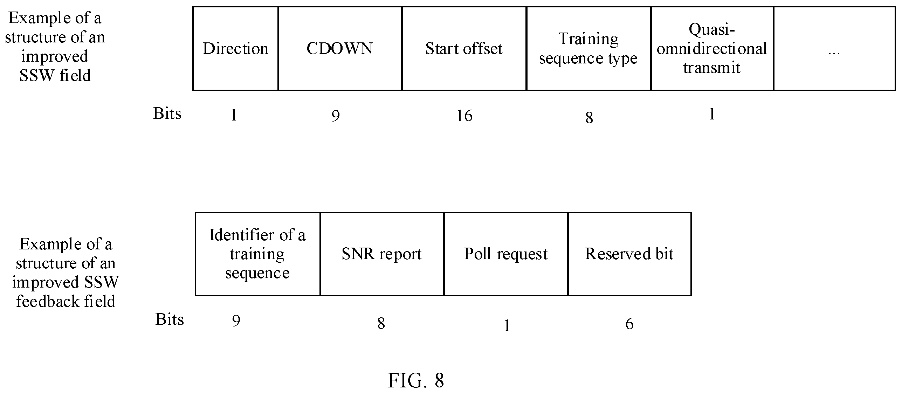

For example, the first frame may be a DMG beacon frame, may be an SSW frame, or may be another possible frame. This is not specifically limited. For example, the first frame is an SSW frame. In this embodiment of this application, an SSW field in the SSW frame may be improved. For example, some fields in the SSW field are deleted, and some fields are added to the SSW field. A deleted field is, for example, a sector identifier field, an antenna identifier field, or a receive sector sweep length field. A newly added field is, for example, a start offset field, a training sequence type (training sequence type) field, or a quasi-omnidirectional transmit (quasi-omni TX) field. FIG. 8 is an example of some fields included in the improved SSW field.

For example, the information about the M training sequences includes second indication information and/or third indication information. In an example, the first frame may include at least one of first indication information, the second indication information, the third indication information, and fourth indication information.

(3.1) The first indication information indicates start time of the sector sweep.

In a possible implementation, the first indication information may include relative time information, where the relative time information is an offset relative to reference time, and the reference time may be, for example, receiving time of the first frame. In this case, the STA may determine the start time of the sector sweep based on the receiving time of the first frame and the offset, and a time interval between the start time of the sector sweep and the receiving time of the first frame is equal to the offset. For example, a unit of the offset may be one or more microseconds, one or more nanoseconds, or another possible time unit. For example, the unit of the offset is 100 nanoseconds.

In still another possible implementation, the first indication information may include absolute time information, and the absolute time information represents specific time. For example, the specific time represented by the absolute time information is X8 nanoseconds X7 milliseconds X6 seconds X5 minutes X4 hours X3 days X2 months X1 years. In this case, the STA may use the specific time represented by the absolute time information as the start time of the sector sweep.

For example, the first indication information may be carried in a start offset field in the first frame, and a quantity of bits included in the start offset field may be set based on an actual requirement. For example, the start offset field includes 16 bits.

It may be understood that the first frame may not include the first indication information. In this case, the offset may be predefined in a protocol. Further, after receiving the first frame, the STA may determine the start time of the sector sweep based on the receiving time of the first frame and the predefined offset.

(3.2) The second indication information indicates a type of the training sequences.

In a possible implementation, a protocol may predefine a plurality of types of training sequences, for example, the type 1, the type 2, and the type 3, so that the AP may indicate a specific type of the training sequences based on the second indication information. For example, the second indication information may include an identifier of the type of the training sequences.

For example, the second indication information may be carried in a training sequence type field in the first frame, and a quantity of bits included in the training sequence type field may be set based on an actual requirement. For example, the training sequence type field includes eight bits.

It may be understood that the first frame may not include the second indication information. In this case, a specific type of the training sequences may be predefined in a protocol.

(3.3) The third indication information indicates a value of M.

For example, an I-TXSS is used as an example, it is assumed that the AP includes two antennas: an antenna 1 and an antenna 2, the antenna 1 corresponds to two sectors, and the antenna 2 corresponds to three sectors. That is, the AP has five sectors in total. If the AP transmits one training sequence in each sector, the value of M may be 5. If the AP transmits two training sequences in each sector, the value of M may be 10.

For example, the third indication information may be carried in a CDOWN field in the first frame.

It may be understood that the first frame may not include the third indication information. In this case, the value of M may be predefined in a protocol.

(3.4) The fourth indication information indicates a type of the sector sweep.

In this embodiment of this application, the type of the sector sweep may be an I-TXSS, an I-RXSS, an R-TXSS, or an R-RXSS.

For example, the fourth indication information may be carried in a direction field and a quasi-omnidirectional transmit field. The direction field includes one bit (referred to as a bit 1), and the quasi-omnidirectional transmit field includes one bit (referred to as a bit 2). For example, when a value of the bit 1 is 0, and a value of the bit 2 is 0, the type of the sector sweep is the I-TXSS; when a value of the bit 1 is 0, and a value of the bit 2 is 1, the type of the sector sweep is the I-RXSS; when a value of the bit 1 is 1, and a value of the bit 2 is 0, the type of the sector sweep is the R-TXSS; or when a value of the bit 1 is 1, and a value of the bit 2 is 1, the type of the sector sweep is the R-RXSS.

In this embodiment of this application, an example in which the first frame includes the first indication information, the second indication information, the third indication information, and the fourth indication information is used. To be specific, after receiving the first frame, the STA may determine the start time of the sector sweep based on the first indication information, determine the type of the training sequences based on the second indication information, determine the value of M based on the third indication information, and determine the type of the sector sweep based on the fourth indication information.

Further, the STA may determine, based on the start time, the type of the training sequences, and the value of M, M time domain locations in which the M training sequences are located, and may further determine duration of the sector sweep. For example, the STA may determine, based on the type of the training sequences, duration (represented as t) of time domain locations in which the training sequences are located. If an interval between different training sequences in the M training sequences is a preset frame interval (represented as T), the STA may determine that the duration of the sector sweep is: M*t+(M-1)*T.

In addition, after determining the start time, the STA may start to perform the sector sweep at the start time. For example, for the I-TXSS and the I-RXSS, the STA may start to search for a training sequence from the AP at the start time, and for the R-TXSS and the R-RXSS, the STA may start to transmit a training sequence at the start time. Alternatively, after determining the start time, the STA may start to perform the sector sweep near the start time. For example, the STA may start to detect an SSW frame from the AP at 400 ns before the start time, to avoid missing the SSW frame.

S602: The AP and the STA perform the sector sweep on the second frequency domain resource based on the information about the M training sequences.

As described above, the type of the sector sweep may be the I-TXSS, the I-RXSS, the R-TXSS, or the R-TXSS. The following separately describes specific implementations of S602 for the four types of sector sweeps.
(1) I-TXSS

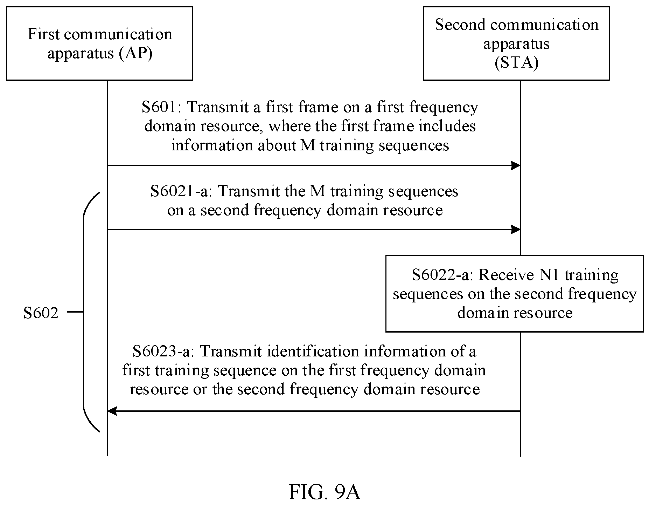

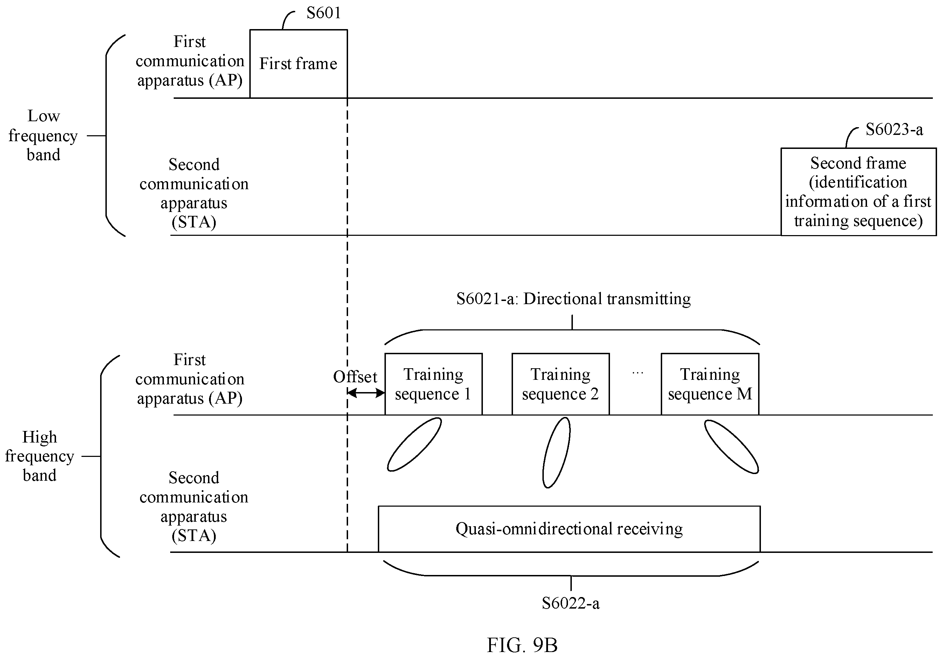

Refer to FIG. 9A and FIG. 9B. When the fourth indication information indicates that the type of the sector sweep is the I-TXSS, S602 may include the following steps.

S6021-a: The AP transmits the M training sequences on the second frequency domain resource, where the M training sequences are used for the initiator transmit sector sweep.

For example, the AP may directionally transmit the M training sequences on the second frequency domain resource. For example, the AP may separately transmit the M training sequences in M transmit sectors of the AP on the second frequency domain resource, that is, transmit one training sequence in each transmit sector. This helps reduce sector sweep overheads. Certainly, the AP may alternatively transmit a plurality of training sequences in each transmit sector. In this embodiment of this application, an example in which the AP transmits one training sequence in each transmit sector is used.

Specifically, as shown in FIG. 9B, transmitting sequence numbers of the M training sequences transmitted by the AP on the second frequency domain resource are sequentially 1, 2, ..., and M. A training sequence numbered 1 is located at a time domain location 1, a training sequence numbered 2 is located at a time domain location 2, and the rest may be deduced by analogy. For example, the AP may store correspondences between the transmitting sequence numbers of the M training sequences and identifiers of transmit antennas and identifiers of transmit sectors. Table 1 is an example of a possible correspondence.

**Table 1: Correspondences between transmitting sequence numbers of M training sequences and identifiers of transmit antennas and identifiers of transmit sectors**

| Transmitting sequence number of a training sequence | Identifier of a transmit antenna | Identifier of a transmit sector |
|---|---|---|
| 1 | X1 | Y1 |
| 2 | X1 | Y2 |
| 3 | X2 | Y3 |
| 4 | X2 | Y4 |
| ... | ... | ... |

S6022-a: The STA receives N1 training sequences on the second frequency domain resource.

For example, the STA may quasi-omnidirectionally receive the N1 training sequences on the second frequency domain resource. The N1 training sequences belong to the M training sequences, and N1 is less than or equal to M. That is, although the AP directionally transmits the M training sequences on the second frequency domain resource, the STA may receive the M training sequences, or may receive only some of the M training sequences.

Specifically, the STA may search for a training sequence at each time domain location based on the M time domain locations in which the M training sequences are located. For example, if the STA receives a training sequence at the time domain location 1, it may be determined that a transmitting sequence number of the training sequence is 1; if the STA does not receive a training sequence at the time domain location 2, but receives a training sequence at a time domain location 3, it may be determined that a transmitting sequence number of the training sequence is 3; and the rest may be deduced by analogy.

S6023-a: The STA transmits a second frame to the AP on the first frequency domain resource or the second frequency domain resource; and correspondingly, the AP receives the second frame from the STA on the first frequency domain resource or the second frequency domain resource.

For example, the STA may omnidirectionally or quasi-omnidirectionally transmit the second frame on the first frequency domain resource or the second frequency domain resource. For example, the STA omnidirectionally transmits the second frame in a low frequency band, and correspondingly, the AP may omnidirectionally receive the second frame in the low frequency band. For another example, the STA quasi-omnidirectionally transmits the second frame in a high frequency band, and correspondingly, the AP may quasi-omnidirectionally receive the second frame in the high frequency band. In this embodiment of this application, an example in which the STA omnidirectionally transmits the second frame in the low frequency band is used for description.

For example, the second frame may include identification information of a first training sequence in the M training sequences, and the identification information of the first training sequence is used to determine an optimal transmit antenna and/or an optimal transmit sector that are/is of the AP on the second frequency domain resource and that correspond/corresponds to the STA. For example, the identification information of the first training sequence may be a transmitting sequence number of the first training sequence in the M training sequences.

Specifically, the STA may select the first training sequence from the N1 training sequences based on receiving quality of the N1 training sequences, and transmit the transmitting sequence number of the first training sequence to the AP through the second frame. For example, receiving quality of a training sequence may be a correlation peak value of the training sequence. There may be a plurality of detection methods for the STA to obtain the receiving quality of the training sequence. For example, the STA may detect the correlation peak value of the training sequence by using a frequency domain method, or may detect the correlation peak value of the training sequence point by point by using a time domain sliding window. In a possible implementation, the STA may determine a detection method depending on whether the training sequence has a cyclic prefix. For example, when the training sequence has the cyclic prefix, the STA may detect the correlation peak value of the training sequence by using the frequency domain method, or when the training sequence does not have the cyclic prefix, the STA may detect the correlation peak value point by point by using the time domain sliding window. For specific implementations of time domain detection and frequency domain detection, refer to the conventional technology.

There may be a plurality of specific implementations in which the STA selects the first training sequence from the N1 training sequences based on the receiving quality of the N1 training sequences.

For example, the STA may select, from the N1 training sequences, a training sequence with best receiving quality as the first training sequence, that is, the receiving quality of the first training sequence may be greater than or equal to receiving quality of other training sequences in the N1 training sequences. In this case, after completing detecting of the training sequences in the M time domain locations, the STA may select, based on the receiving quality of the received N1 training sequences, the training sequence with the best receiving quality as the first training sequence.

For another example, the STA may select, from the N1 training sequences, a training sequence whose receiving quality is greater than or equal to a threshold as the first training sequence. In this case, in an example, each time the STA receives a training sequence, the STA may determine whether receiving quality of the training sequence is greater than or equal to the threshold. If the receiving quality of the training sequence is less than the threshold, the STA continues to receive a next training sequence. If the receiving quality of the training sequence is greater than or equal to the threshold, the STA may use the training sequence as the first training sequence, and stop receiving a training sequence (that is, stop receiving a training sequence in advance). This helps reduce power consumption of the STA.

Correspondingly, after receiving the transmitting sequence number of the first training sequence, the AP may determine, according to the correspondences shown in Table 1, the optimal transmit antenna and the optimal transmit sector that are of the AP and that correspond to the STA.

For example, the second frame may be an SSW feedback frame or another possible frame. This is not specifically limited. For example, the second frame is the SSW feedback frame. In this embodiment of this application, an SSW feedback field in the SSW feedback frame may be improved. For example, some fields in the SSW feedback field are deleted, and a new field is added to the SSW feedback field. A deleted field is, for example, a sector select (sector Select) field or an antenna select (antenna select) field. The newly added field is, for example, a training sequence select field, and the training sequence select field may include the identification information of the first training sequence. FIG. 8 is an example of some fields included in the improved SSW feedback field.

Optionally, after receiving the second frame, the AP may transmit, to the STA, an acknowledgment frame of the second frame, that is, an SSW feedback acknowledgment frame. For example, the AP may transmit the SSW feedback acknowledgment frame to the STA on the first frequency domain resource or the second frequency domain resource.

It may be understood that a transmitting sequence number may also be referred to as a transmitting sequence serial number. The foregoing is an example in which the identification information of the first training sequence is the transmitting sequence number of the first training sequence. In another possible example, the identification information of the first training sequence may alternatively be a countdown corresponding to the first training sequence. For example, a countdown corresponding to the training sequence whose transmitting sequence number is 1 is M, a countdown corresponding to the training sequence whose transmitting sequence number is 2 is M-1, and the rest may be deduced by analogy.

### (2) I-RXSS

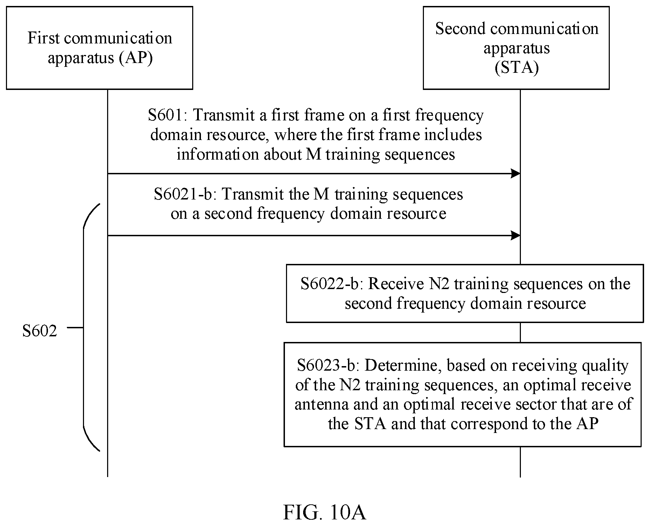

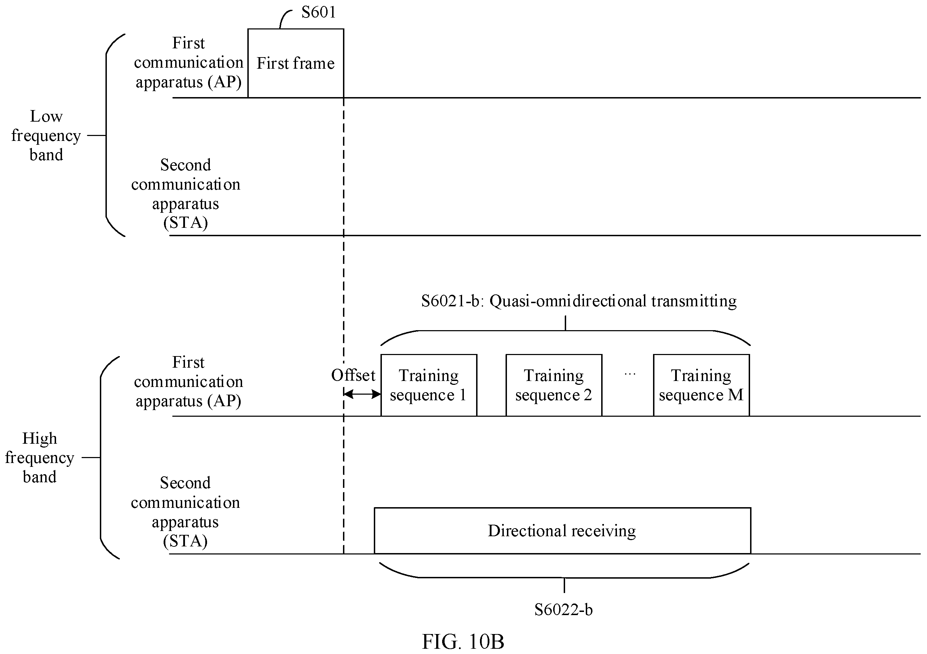

Refer to FIG. 10A and FIG. 10B. When the fourth indication information indicates that the type of the sector sweep is the I-RXSS, S602 may include the following steps.

S6021-b: The AP transmits the M training sequences on the second frequency domain resource, where the M training sequences are used for the initiator receive sector sweep.

For example, the AP may quasi-omnidirectionally transmit the M training sequences on the second frequency domain resource.

S6022-b: The STA receives N2 training sequences on the second frequency domain resource.

For example, the STA may directionally receive the N2 training sequences on the second frequency domain resource. For example, the STA may separately receive the N2 training sequences in N2 receive sectors of the STA, that is, receive one training sequence in each receive sector. The N2 training sequences belong to the M training sequences, and N2 is less than or equal to M. That is, although the AP quasi-omnidirectionally transmits the M training sequences on the second frequency domain resource, the STA may receive the M training sequences, or may receive only some of the M training sequences.

In a possible implementation, the AP may obtain a quantity of receive sectors of the STA, and further determine, based on the quantity of receive sectors of the STA, a quantity of training sequences that need to be transmitted. For example, if the STA has five receive sectors in total, the AP may transmit five training sequences (that is, M=5). This can effectively avoid an excessively large quantity or an excessively small quantity of training sequences transmitted by the AP.

S6023-b: The STA determines, based on receiving quality of the N2 training sequences, an optimal receive antenna and an optimal receive sector that are of the STA and that correspond to the AP.

For example, the STA may determine, based on a receive antenna and/or a receive sector corresponding to a training sequence with best receiving quality in the N2 training sequences, the optimal receive antenna and/or the optimal receive sector that are/is of the STA and that correspond/corresponds to the AP.

It may be understood that, because the STA may determine the value of M based on the first frame, when the STA determines that the value of M is small (that is, the AP transmits a small quantity of training sequences), the STA may select, based on an application scenario requirement, some antennas to perform beam training, or perform coarse receive beam training through sector combination; or when the STA determines that the value of M is large (that is, the AP transmits a large quantity of training sequences), the STA may end beam training in advance, to reduce power consumption. For example, when M is less than the quantity of receive sectors of the STA, the STA may determine that the value of M is small; or when M is greater than the quantity of receive sectors of the STA, the STA may determine that the value of M is large.

### (3) R-TXSS

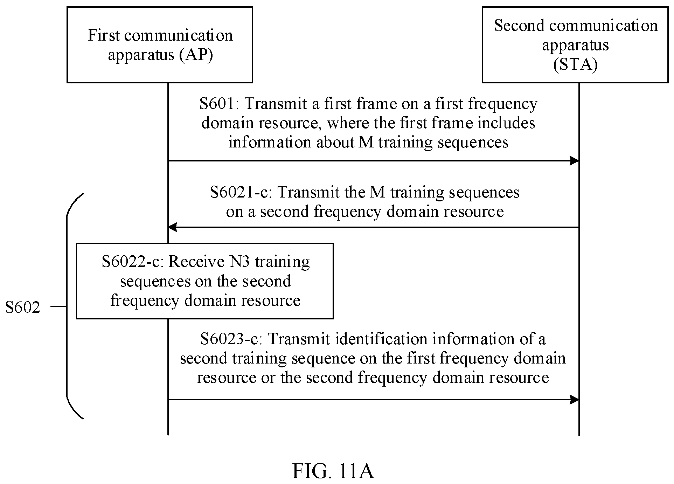

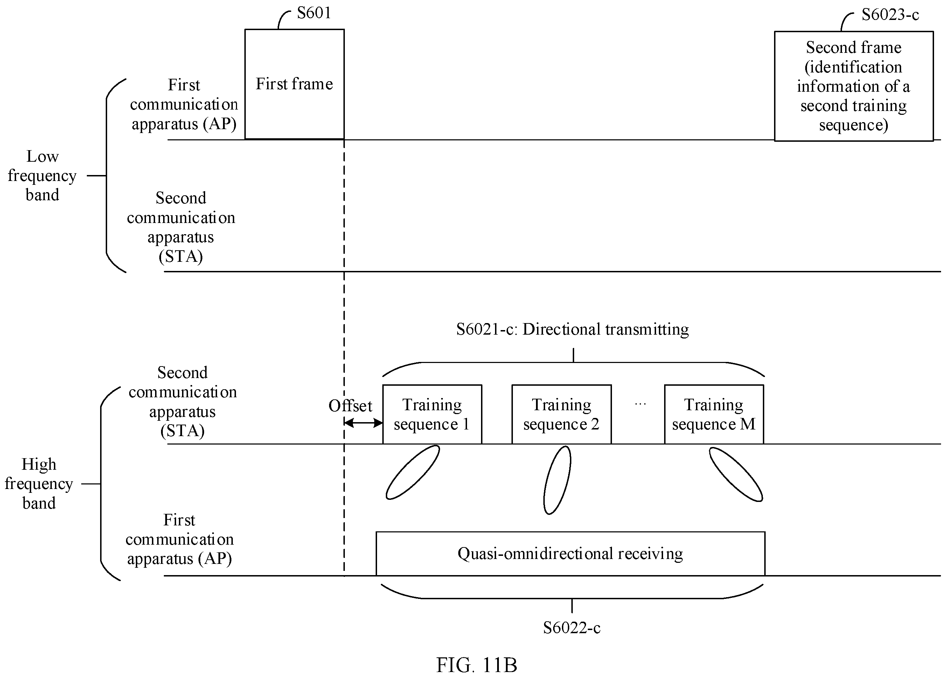

Refer to FIG. 11A and FIG. 11B. When the fourth indication information indicates that the type of the sector sweep is the R-TXSS, S602 may include the following steps.

S6021-c: The STA transmits the M training sequences on the second frequency domain resource, where the M training sequences are used for the responder transmit sector sweep.

For example, the STA may directionally transmit the M training sequences on the second frequency domain resource. For example, the STA may separately transmit the M training sequences in M transmit sectors of the STA on the second frequency domain resource, that is, transmit one training sequence in each transmit sector. This helps reduce sector sweep overheads. Certainly, the STA may alternatively transmit a plurality of training sequences in each transmit sector. In this embodiment of this application, an example in which the STA transmits one training sequence in each transmit sector is used.

S6022-c: The AP receives N3 training sequences on the second frequency domain resource.

For example, the AP may quasi-omnidirectionally receive the N3 training sequences on the second frequency domain resource. The N3 training sequences belong to the M training sequences, and N3 is less than or equal to M. That is, although the STA directionally transmits the M training sequences on the second frequency domain resource, the AP may receive the M training sequences, or may receive only some of the M training sequences.

S6023-c: The AP transmits a second frame to the STA on the first frequency domain resource or the second frequency domain resource; and correspondingly, the STA receives the second frame from the AP.

For example, the second frame may include identification information of a second training sequence in the M training sequences, and the identification information of the second training sequence is used to determine an optimal transmit antenna and/or an optimal transmit sector that are/is of the STA on the second frequency domain resource and that correspond/corresponds to the AP. For example, the identification information of the second training sequence may be a transmitting sequence number of the second training sequence in the M training sequences.

For example, for a specific implementation of the sector sweep in the R-TXSS, refer to descriptions in the I-TXSS. Details are not described again.

### (4) R-RXSS

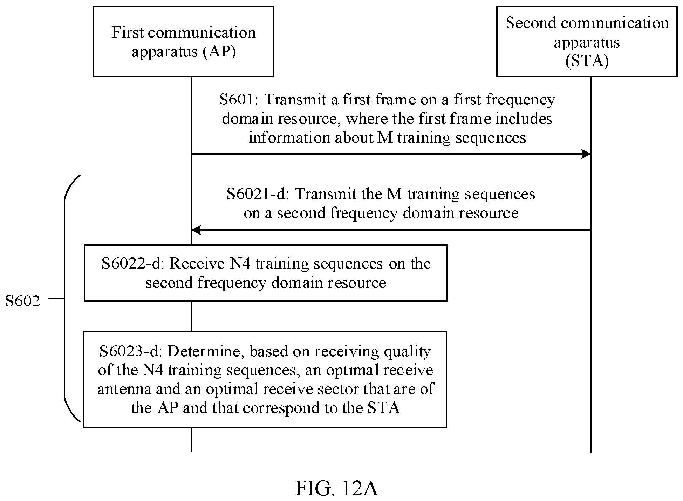

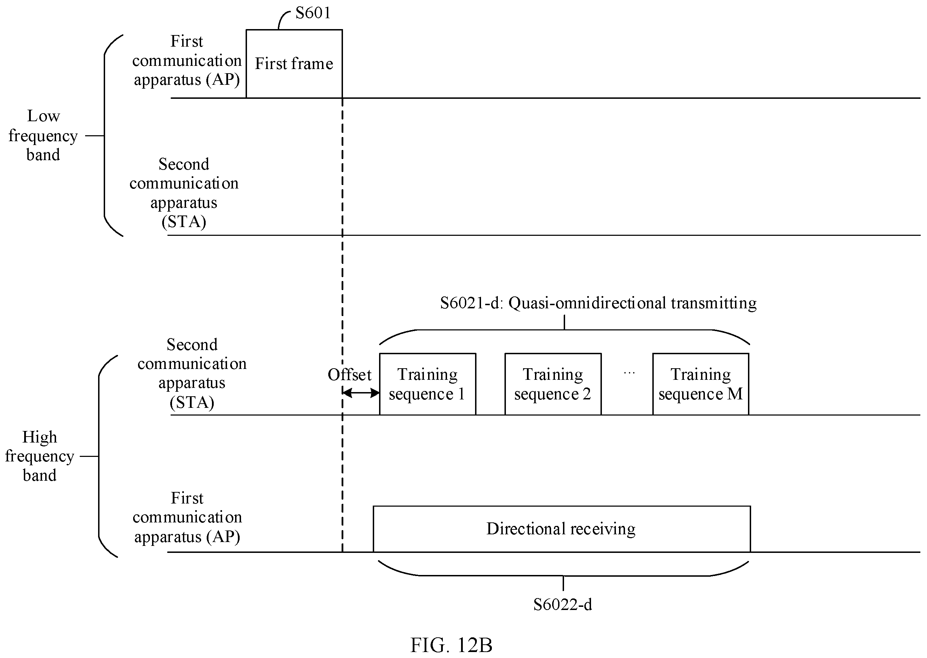

Refer to FIG. 12A and FIG. 12B. When the fourth indication information indicates that the type of the sector sweep is the R-RXSS, S602 may include the following steps.

S6021-d: The STA transmits the M training sequences on the second frequency domain resource, where the M training sequences are used for the responder receive sector sweep.

For example, the STA may quasi-omnidirectionally transmit the M training sequences on the second frequency domain resource.

S6022-d: The AP directionally receives N4 training sequences on the second frequency domain resource.

For example, the AP may directionally receive the N4 training sequences on the second frequency domain resource. The N4 training sequences belong to the M training sequences, and N4 is less than or equal to M. That is, although the STA quasi-omnidirectionally transmits the M training sequences on the second frequency domain resource, the AP may receive the M training sequences, or may receive only some of the M training sequences.

S6023-d: The AP determines, based on receiving quality of the N4 training sequences, an optimal receive antenna and an optimal receive sector that are of the AP and that correspond to the STA.

For example, for a specific implementation of the sector sweep in the R-RXSS, refer to descriptions in the I-RXSS. Details are not described again.

It can be learned from the foregoing description that, in one aspect, in this embodiment of this application, a new SSW frame (including only a training sequence) is used for the sector sweep. Compared with a manner of performing the sector sweep by using an SSW frame, because the new SSW frame does not include redundant information such as a preamble and a physical frame header, this manner can effectively improve a throughput, and further improve sector sweep efficiency.

In another aspect, in this embodiment of this application, the AP may transmit the first frame to the STA in a low frequency band, and the AP or the STA may transmit or receive the new SSW frame (namely, a training sequence) in a high frequency band. In this way, the sector sweep is completed through mutual cooperation between the low frequency band and the high frequency band, so that overall communication efficiency and a throughput of a network can be effectively improved. In addition, because a coverage area of the low frequency band is large, a probability that the STA successfully receives the first frame can be increased by transmitting, by the AP, the first frame in the low frequency band.

In still another aspect, an I-TXSS is used as an example. In an existing I-TXSS, after the AP directionally transmits a plurality of SSW frames, the STA quasi-omnidirectionally receives at least one SSW frame, measures receiving quality of the at least one SSW frame, demodulates the at least one SSW frame to obtain an identifier of a transmit antenna used to transmit the at least one SSW frame and an identifier of a transmit sector used to transmit the at least one SSW frame, further determines an optimal transmit antenna and an optimal transmit sector that are of the AP and that correspond to the STA, and transmits, to the AP, an identifier of the optimal transmit antenna and an identifier of the optimal transmit sector. However, because a path loss of a high frequency band is large, reliability of demodulating, by the STA, a quasi-omnidirectionally received SSW frame is low; and if an SSW frame fails to be demodulated, a beam training result may be inaccurate. However, in this embodiment of the present invention, after the STA receives the training sequences, the STA may select, based on receiving quality of the training sequences, a training sequence with best receiving quality, and further transmit, to the AP, a transmitting sequence number of the training sequence, and the AP may determine, based on the transmitting sequence number of the training sequence, the optimal transmit antenna and the optimal transmit sector that are of the AP and that correspond to the STA. This can avoid demodulation of a quasi-omnidirectionally received SSW frame, and improve accuracy of a beam training result.

In still another aspect, an I-TXSS is used as an example. In an existing I-TXSS, because the STA does not know when to start a sector sweep, the STA may search for an SSW frame for a long time. Consequently, power consumption of the STA is high. However, in this embodiment of the present invention, the AP may notify the STA of the start time of the sector sweep (and the duration of the sector sweep) through the first frame, so that the STA can start to search for a training sequence based on the start time. This effectively reduces power consumption of the STA.

In addition, for the foregoing embodiments, it may be understood that: (1) The AP may transmit the first frame to a specific STA (for example, the foregoing STA) in a unicast manner, or the AP may transmit the first frame in a broadcast manner. For example, the first frame includes a receiver address field. When the AP transmits the first frame in the unicast manner, the receiver address field includes an address of the specific STA; or when the AP transmits the first frame in the broadcast manner, the receiver address field includes a broadcast address (for example, when all bits of the receiver address field are set to 0, the receiver address is a broadcast address). The foregoing uses an example in which the AP transmits the first frame in the unicast manner, that is, an example in which the AP performs the sector sweep with one STA. When the AP transmits the first frame in the broadcast manner, the AP may perform the sector sweep with a plurality of STAs at the same time. For details, refer to an implementation of performing a sector sweep with one STA by the AP.

(2) As described above, the first frame may include one SSW field, and the SSW field includes the first indication information to the fourth indication information. The AP and the STA may perform a corresponding sector sweep based on the first indication information to the fourth indication information. In another possible embodiment, the first frame may include a plurality of SSW fields. For example, the first frame includes an SSW field 1 and an SSW field 2. The SSW field 1 includes first indication information 1 (indicating an offset 1), second indication information 1 (indicating a type 1), third indication information 1 (indicating that a value of M is M1), and fourth indication information 1 (indicating that a sector sweep is an I-TXSS). The SSW field 2 includes first indication information 2 (indicating an offset 2), second indication information 2 (indicating a type 2), third indication information 2 (indicating that a value of M is M2), and fourth indication information 2 (indicating that a sector sweep is an I-RXSS). Further, the AP and the STA may perform the I-TXSS based on the SSW field 1, and perform the I-RXSS based on the SSW field 2.

The foregoing mainly describes the solutions provided in embodiments of this application from a perspective of interaction between communication apparatuses. It may be understood that, to implement the foregoing functions, the first communication apparatus and the second communication apparatus may include corresponding hardware structures and/or software modules for performing the functions. A person skilled in the art should be easily aware that, with reference to the units and algorithm steps in the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first communication apparatus and the second communication apparatus may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

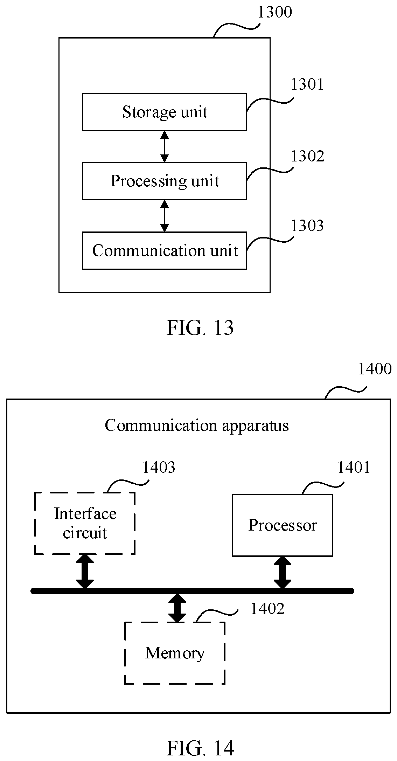

FIG. 13 is a possible example block diagram of an apparatus according to an embodiment of this application. As shown in FIG. 13, an apparatus 1300 may include a processing unit 1302 and a communication unit 1303. The processing unit 1302 is configured to control and manage an action of the apparatus 1300. The communication unit 1303 is configured to support communication between the apparatus 1300 and another device. Optionally, the communication unit 1303 is also referred to as a transceiver unit, and may include a receiving unit and/or a transmitting unit, respectively configured to perform a receiving operation and a transmitting operation. The apparatus 1300 may further include a storage unit 1301 configured to store program code and/or data of the apparatus 1300.

The apparatus 1300 may be the first communication apparatus (for example, an AP) in the foregoing embodiments, or may be a component (for example, a circuit or a chip) disposed in an AP. The processing unit 1302 may support the apparatus 1300 in performing actions of the AP in the foregoing method examples. Alternatively, the processing unit 1302 mainly performs internal actions of the AP in the method examples, and the communication unit 1303 may support communication between the apparatus 1300 and another device.

For example, in an embodiment, the communication unit 1303 is configured to: transmit a first frame on a first frequency domain resource, where the first frame includes information about M training sequences, the M training sequences are used for a sector sweep on a second frequency domain resource, and M is an integer greater than 1; and perform the sector sweep with a second communication apparatus on the second frequency domain resource based on the information about the M training sequences, where a frequency corresponding to the first frequency domain resource is less than a frequency corresponding to the second frequency domain resource.

The apparatus 1300 may be the second communication apparatus (for example, a STA) in the foregoing embodiments, or may be a component (for example, a circuit or a chip) disposed in a STA. The processing unit 1302 may support the apparatus 1300 in performing actions of the STA in the foregoing method examples. Alternatively, the processing unit 1302 mainly performs internal actions of the STA in the method examples, and the communication unit 1303 may support communication between the apparatus 1300 and another device.

In an embodiment, the communication unit 1303 is configured to: receive a first frame from a first communication apparatus on a first frequency domain resource or a second frequency domain resource, where the first frame includes information about M training sequences, the M training sequences are used for a sector sweep on the second frequency domain resource, and M is an integer greater than 1; and perform the sector sweep with the first communication apparatus on the second frequency domain resource based on the information about the M training sequences, where a frequency corresponding to the first frequency domain resource is less than a frequency corresponding to the second frequency domain resource.

It should be understood that division into the units in the foregoing apparatus is merely logical function division, and during actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element or may be implemented by using software invoked by a processing element.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for transmitting is an interface circuit of the apparatus, and is configured to transmit a signal to another apparatus. For example, when the apparatus is implemented in a manner of a chip, the transmitting unit is an interface circuit that is of the chip and that is configured to transmit a signal to another chip or apparatus.

FIG. 14 is a diagram of a structure of a communication apparatus according to an embodiment of this application. The communication apparatus is configured to implement operations of the first communication apparatus (for example, an AP) in the foregoing embodiments.

As shown in FIG. 14, a communication apparatus 1400 may include a processor 1401, a memory 1402, and an interface circuit 1403. The processor 1401 may be configured to: process a communication protocol and communication data, and control the communication apparatus 1400. The memory 1402 may be configured to store a program and data, and the processor 1401 may perform, based on the program, methods performed by the AP in embodiments of this application. The interface circuit 1403 may be used by the communication apparatus 1400 to communicate with another device, the communication may be wired communication or wireless communication, and the interface circuit may alternatively be replaced with a transceiver.

Alternatively, the memory 1402 may be externally connected to the communication apparatus 1400. In this case, the communication apparatus 1400 may include the interface circuit 1403 and the processor 1401. Alternatively, the interface circuit 1403 may be externally connected to the communication apparatus 1400. In this case, the communication apparatus 1400 may include the memory 1402 and the processor 1401. When both the interface circuit 1403 and the memory 1402 are externally connected to the communication apparatus 1400, the communication apparatus 1400 may include the processor 1401.

The communication apparatus shown in FIG. 14 can implement processes related to the AP in the foregoing method embodiments. Operations and/or functions of modules in the communication apparatus shown in FIG. 14 are separately used to implement corresponding procedures in the foregoing method embodiments. For details, refer to descriptions in the foregoing method embodiments. To avoid repetition, detailed descriptions are properly omitted herein.

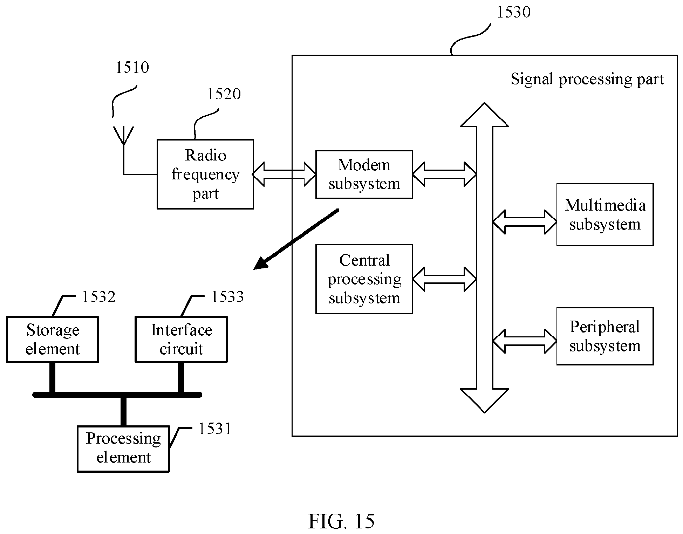

FIG. 15 is a diagram of a structure of a communication apparatus according to an embodiment of this application. The communication apparatus is configured to implement operations of the second communication apparatus (for example, a STA) in the foregoing embodiments. As shown in FIG. 15, the communication apparatus includes an antenna 1510, a radio frequency part 1520, and a signal processing part 1530. The antenna 1510 is connected to the radio frequency part 1520. In a downlink direction, the radio frequency part 1520 receives, through the antenna 1510, information transmitted by an AP, and transmits the information transmitted by the AP to the signal processing part 1530 for processing. In an uplink direction, the signal processing part 1530 processes information about a STA, and transmits the information about the STA to the radio frequency part 1520, and after the radio frequency part 1520 processes the information about the STA, the radio frequency part 1520 transmits the information about the STA to the AP through the antenna 1510.

The signal processing part 1530 may include a modem subsystem configured to process data at communication protocol layers, and may further include a central processing subsystem configured to process an operating system and an application layer of the STA. In addition, the signal processing part 1530 may further include another subsystem, for example, a multimedia subsystem or a peripheral subsystem, the multimedia subsystem is configured to control a camera, screen display, and the like, and the peripheral subsystem is configured to connect to another device. The modem subsystem may be a separately disposed chip.

The modem subsystem may include one or more processing elements 1531, for example, include a main control CPU and another integrated circuit. In addition, the modem subsystem may further include a storage element 1532 and an interface circuit 1533. The storage element 1532 is configured to store data and a program. However, the program used to perform methods performed by the STA in the foregoing methods may not be stored in the storage element 1532, but is stored in a memory outside the modem subsystem, and when the program is used, the program is loaded and used by the modem subsystem. The interface circuit 1533 is configured to communicate with another subsystem.

The modem subsystem may be implemented by using a chip. The chip includes at least one processing element and an interface circuit. The processing element is configured to perform steps of any method performed by the STA, and the interface circuit is configured to communicate with another apparatus. In an implementation, units that are of the STA and that implement the steps in the foregoing methods may be implemented in a form of scheduling a program by a processing element. For example, an apparatus used in the STA includes a processing element and a storage element, and the processing element invokes a program stored in the storage element, to perform the methods performed by the STA in the foregoing method embodiments. The storage element may be a storage element located on a same chip as the processing element, that is, an on-chip storage element.

In another implementation, a program used to perform the methods performed by the STA in the foregoing methods may be in a storage element located on a chip different from the processing element, that is, an off-chip storage element. In this case, the processing element invokes or loads the program from the off-chip storage element to the on-chip storage element, to invoke and perform the methods performed by the STA in the foregoing method embodiments.

In still another implementation, units that are of the STA and that implement the steps in the foregoing methods may be configured as one or more processing elements, these processing elements are disposed on the modem subsystem, and the processing elements herein may be integrated circuits, for example, one or more ASICs, one or more DSPs, one or more FPGAs, or a combination of these integrated circuits. These integrated circuits may be integrated together to form a chip.

Units that are of the STA and that implement the steps in the foregoing methods may be integrated together and implemented in a form of an SOC, and the SOC chip is configured to implement the foregoing methods. At least one processing element and a storage element may be integrated into the chip, and the processing element invokes a program stored in the storage element to implement the foregoing methods performed by the STA; or at least one integrated circuit may be integrated into the chip, to implement the foregoing methods performed by the STA; or with reference to the foregoing implementations, functions of some units are implemented in a form of invoking a program by the processing element, and functions of some units are implemented in a form of an integrated circuit.

It can be learned that the foregoing apparatus used for the STA may include at least one processing element and an interface circuit, and the at least one processing element is configured to perform any method performed by the STA in the foregoing method embodiments. The processing element may perform some or all of the steps performed by the STA in a first manner, that is, by invoking a program stored in the storage element; or may perform some or all of the steps performed by the STA in a second manner, that is, by using a hardware integrated logic circuit in a processor element in combination with instructions. Certainly, some or all of the steps performed by the STA may also be performed by combining the first manner and the second manner.

The processing element herein is the same as that described above, and may be implemented by using a processor. A function of the processing element may be the same as a function of the processing unit described in FIG. 13. For example, the processing element may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuit forms. The storage element may be implemented by using a memory. A function of the storage element may be the same as a function of the storage unit described in FIG. 13. The storage element may be a memory, or may be a general name of a plurality of memories.

The STA shown in FIG. 15 can implement processes related to the STA in the foregoing method embodiments. Operations and/or functions of the modules in the STA shown in FIG. 15 are separately used to implement corresponding procedures in the foregoing method embodiments. For details, refer to descriptions in the foregoing method embodiments. To avoid repetition, detailed descriptions are properly omitted herein.

An embodiment of this application further provides a communication system. The communication system may include an AP and a STA, the AP is configured to perform AP-side steps in the foregoing method embodiments, and the STA is configured to perform STA-side steps in the foregoing method embodiments.

The terms "system" and "network" may be used interchangeably in embodiments of this application. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, orABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A sector sweep method, wherein the method comprises:
transmitting, by a first communication apparatus, a first frame on a first frequency domain resource or a second frequency domain resource, wherein the first frame comprises information about M training sequences, the M training sequences are used for a sector sweep on the second frequency domain resource, and M is an integer greater than 1; and
performing, by the first communication apparatus, the sector sweep with the second communication apparatus on the second frequency domain resource based on the information about the M training sequences, wherein
a frequency corresponding to the first frequency domain resource is less than a frequency corresponding to the second frequency domain resource.

2. The method according to claim 1, wherein the first frame further comprises first indication information, and the first indication information indicates start time of the sector sweep.

3. The method according to claim 2, wherein the first indication information comprises an offset, and a time interval between the start time and receiving time of the first frame is equal to the offset.

4. The method according to any one of claims 1 to 3, wherein the information about the M training sequences comprises second indication information and/or third indication information; and
the second indication information indicates a type of the M training sequences, and the third indication information indicates a value of M.

5. The method according to any one of claims 1 to 4, wherein the training sequence comprises a cyclic prefix, a length of the cyclic prefix is greater than a memory length of a channel, and the channel is used to transmit the training sequence.

6. The method according to any one of claims 1 to 5, wherein the first frame further comprises fourth indication information, and the fourth indication information indicates that the sector sweep is an initiator transmit sector sweep; and
the performing, by the first communication apparatus, the sector sweep with the second communication apparatus on the second frequency domain resource based on the information about the M training sequences comprises:
transmitting, by the first communication apparatus, the M training sequences on the second frequency domain resource; and
receiving, by the first communication apparatus, a second frame from the second communication apparatus on the first frequency domain resource or the second frequency domain resource, wherein the second frame comprises identification information of a first training sequence in the M training sequences, and the identification information of the first training sequence is used to determine an optimal transmit antenna and/or an optimal transmit sector that are/is of the first communication apparatus on the second frequency domain resource and that correspond/corresponds to the second communication apparatus.

7. The method according to claim 6, wherein the transmitting, by the first communication apparatus, the M training sequences on the second frequency domain resource comprises:
separately transmitting, by the first communication apparatus, the M training sequences in M transmit sectors of the first communication apparatus on the second frequency domain resource.

8. The method according to claim 6, wherein the identification information of the first training sequence is a transmitting sequence number of the first training sequence in the M training sequences.

9. The method according to any one of claims 1 to 5, wherein the first frame further comprises fourth indication information, and the fourth indication information indicates that the sector sweep is an initiator receive sector sweep; and
the performing, by the first communication apparatus, the sector sweep with the second communication apparatus on the second frequency domain resource based on the information about the M training sequences comprises:
transmitting, by the first communication apparatus, the M training sequences on the second frequency domain resource, wherein the M training sequences are used to determine an optimal receive antenna and/or an optimal receive sector that are/is of the second communication apparatus on the second frequency domain resource and that correspond/corresponds to the first communication apparatus.

10. The method according to any one of claims 1 to 5, wherein the first frame further comprises fourth indication information, and the fourth indication information indicates that the sector sweep is a responder transmit sector sweep; and
the performing, by the first communication apparatus, the sector sweep with the second communication apparatus on the second frequency domain resource based on the information about the M training sequences comprises:
receiving, by the first communication apparatus, N3 training sequences from the second communication apparatus on the second frequency domain resource, wherein the N3 training sequences belong to the M training sequences, N3 is an integer greater than 0, and N3 is less than or equal to M; and
transmitting, by the first communication apparatus, a second frame to the second communication apparatus on the first frequency domain resource or the second frequency domain resource, wherein the second frame comprises identification information of a second training sequence in the N3 training sequences, and the identification information of the second training sequence is used to determine an optimal transmit antenna and/or an optimal transmit sector that are/is of the second communication apparatus on the second frequency domain resource and that correspond/corresponds to the first communication apparatus.

11. The method according to claim 10, wherein the identification information of the second training sequence is a transmitting sequence number of the second training sequence in the M training sequences.

12. The method according to any one of claims 1 to 5, wherein the first frame further comprises fourth indication information, and the fourth indication information indicates that the sector sweep is a responder receive sector sweep; and
the performing, by the first communication apparatus, the sector sweep with the second communication apparatus on the second frequency domain resource based on the information about the M training sequences comprises:
receiving, by the first communication apparatus, N4 training sequences from the second communication apparatus on the second frequency domain resource, wherein the N4 training sequences belong to the M training sequences, N4 is an integer greater than 0, and N4 is less than or equal to M; and
determining, by the first communication apparatus based on receiving quality of the N4 training sequences, an optimal receive antenna and/or an optimal receive sector that are/is of the first communication apparatus on the second frequency domain resource and that correspond/corresponds to the second communication apparatus.

13. The method according to claim 12, wherein the receiving, by the first communication apparatus, N4 training sequences from the second communication apparatus on the second frequency domain resource comprises:
separately receiving, by the first communication apparatus, the N4 training sequences from the second communication apparatus in N4 receive sectors of the first communication apparatus on the second frequency domain resource.

14. A sector sweep method, wherein the method comprises:
receiving, by a second communication apparatus, a first frame from a first communication apparatus on a first frequency domain resource or a second frequency domain resource, wherein the first frame comprises information about M training sequences, the M training sequences are used for a sector sweep on the second frequency domain resource, and M is an integer greater than 1; and
performing, by the second communication apparatus, the sector sweep with the first communication apparatus on the second frequency domain resource based on the information about the M training sequences, wherein
a frequency corresponding to the first frequency domain resource is less than a frequency corresponding to the second frequency domain resource.

15. The method according to claim 14, wherein the first frame further comprises first indication information, and the first indication information indicates start time of the sector sweep.

16. The method according to claim 15, wherein the first indication information comprises an offset, and a time interval between the start time and receiving time of the first frame is equal to the offset.

17. The method according to any one of claims 14 to 16, wherein the information about the M training sequences comprises second indication information and/or third indication information; and
the second indication information indicates a type of the M training sequences, and the third indication information indicates a value of M.

18. The method according to any one of claims 14 to 17, wherein the training sequence comprises a cyclic prefix, a length of the cyclic prefix is greater than a memory length of a channel, and the channel is used to transmit the training sequence.

19. The method according to any one of claims 14 to 18, wherein the first frame further comprises fourth indication information, and the fourth indication information indicates that the sector sweep is an initiator transmit sector sweep; and
the performing, by the second communication apparatus, the sector sweep with the first communication apparatus on the second frequency domain resource based on the information about the M training sequences comprises:
receiving, by the second communication apparatus, N1 training sequences from the first communication apparatus on the second frequency domain resource, wherein the N1 training sequences belong to the M training sequences, N1 is an integer greater than 0, and N1 is less than or equal to M; and
transmitting, by the second communication apparatus, a second frame to the first communication apparatus on the first frequency domain resource or the second frequency domain resource, wherein the second frame comprises identification information of a first training sequence in the N1 training sequences, and the identification information of the first training sequence is used to determine an optimal transmit antenna and/or an optimal transmit sector that are/is of the first communication apparatus on the second frequency domain resource and that correspond/corresponds to the second communication apparatus.

20. The method according to claim 19, wherein the identification information of the first training sequence is a transmitting sequence number of the first training sequence in the M training sequences.

21. The method according to any one of claims 14 to 18, wherein the first frame further comprises fourth indication information, and the fourth indication information indicates that the sector sweep is an initiator receive sector sweep; and
the performing, by the second communication apparatus, the sector sweep with the first communication apparatus on the second frequency domain resource based on the information about the M training sequences comprises:
receiving, by the second communication apparatus, N2 training sequences from the first communication apparatus on the second frequency domain resource, wherein the N2 training sequences belong to the M training sequences, N2 is an integer greater than 0, and N2 is less than or equal to M; and
determining, by the second communication apparatus, based on receiving quality of the N2 training sequences, an optimal receive antenna and/or an optimal receive sector that are/is of the second communication apparatus on the second frequency domain resource and that correspond/corresponds to the first communication apparatus.

22. The method according to claim 21, wherein the receiving, by the second communication apparatus, N2 training sequences from the first communication apparatus on the second frequency domain resource comprises:
separately receiving, by the second communication apparatus, the N2 training sequences from the first communication apparatus in N2 receive sectors of the second communication apparatus on the second frequency domain resource.

23. The method according to any one of claims 14 to 18, wherein the first frame further comprises fourth indication information, and the fourth indication information indicates that the sector sweep is a responder transmit sector sweep; and
the performing, by the second communication apparatus, the sector sweep with the first communication apparatus on the second frequency domain resource based on the information about the M training sequences comprises:
transmitting, by the second communication apparatus, the M training sequences on the second frequency domain resource; and
receiving, by the second communication apparatus, a second frame from the first communication apparatus on the first frequency domain resource or the second frequency domain resource, wherein the second frame comprises identification information of a second training sequence in the M training sequences, and the identification information of the second training sequence is used to determine an optimal transmit antenna and/or an optimal transmit sector that are/is of the second communication apparatus on the second frequency domain resource and that correspond/corresponds to the first communication apparatus.

24. The method according to claim 23, wherein the transmitting, by the second communication apparatus, the M training sequences on the second frequency domain resource comprises:
separately transmitting, by the second communication apparatus, the M training sequences in M transmit sectors of the second communication apparatus on the second frequency domain resource.

25. The method according to claim 24, wherein the identification information of the second training sequence is a transmitting sequence number of the second training sequence in the M training sequences.

26. The method according to any one of claims 14 to 18, wherein the first frame further comprises fourth indication information, and the fourth indication information indicates that the sector sweep is a responder receive sector sweep; and
the performing, by the second communication apparatus, the sector sweep with the first communication apparatus on the second frequency domain resource based on the information about the M training sequences comprises:
transmitting, by the second communication apparatus, the M training sequences on the second frequency domain resource, wherein the M training sequences are used to determine an optimal receive antenna and/or an optimal receive sector that are/is of the first communication apparatus on the second frequency domain resource and that correspond/corresponds to the second communication apparatus.

27. A communication apparatus, comprising a processor, wherein the processor is coupled to a memory, the memory stores a computer program, and the processor is configured to invoke the computer program in the memory, to enable the communication apparatus to perform the method according to any one of claims 1 to 13 or the method according to any one of claims 14 to 26.

28. A computer-readable storage medium, wherein the storage medium stores a computer program or instructions, and when the computer program or the instructions are executed by a computer, the method according to any one of claims 1 to 13 or the method according to any one of claims 14 to 26 is implemented.

29. A computer program product, wherein when a computer reads and executes the computer program product, the computer is enabled to perform the method according to any one of claims 1 to 13 or the method according to any one of claims 14 to 26.
